(19) Europäisches Patentamt
European Patent Office
Office européen des brevets

(11) EP 1 876 592 A1

(12) EUROPEAN PATENT APPLICATION
published in accordance with Art. 153(4) EPC

(43) Date of publication:
09.01.2008 Bulletin 2008/02

(21) Application number: 06731660.4

(22) Date of filing: 12.04.2006

(51) Int Cl.:
*G11B 7/24* (2006.01) *G11B 7/254* (2006.01)
*G11B 7/257* (2006.01)

(86) International application number:
PCT/JP2006/307713

(87) International publication number:
WO 2006/112312 (26.10.2006 Gazette 2006/43)

(84) Designated Contracting States:
AT BE BG CH CY CZ DE DK EE ES FI FR GB GR HU IE IS IT LI LT LU LV MC NL PL PT RO SE SI SK TR

(30) Priority: 13.04.2005 JP 2005115870
13.04.2005 JP 2005115922
13.04.2005 JP 2005115923
13.04.2005 JP 2005115924

(71) Applicant: FUJIFILM Corporation
Minato-ku
Tokyo 106-8620 (JP)

(72) Inventors:
- KAKUTA, Takeshi,
c/o FUJIFILM CORPORATION
Odawara-shi, Kanagawa 250-0001 (JP)
- KATAYAMA, Kazutoshi,
c/o FUJIFILM CORPORATION
Odawara-shi, Kanagawa 250-0001 (JP)
- KAMISAWA, Shiho,
c/o FUJIFILM CORPORATION
Odawara-shi, Kanagawa 250-0001 (JP)
- KAWANO, Nobuyuki,
c/o FUJIFILM CORPORATION
Odawara-shi, Kanagawa 250-0001 (JP)

(74) Representative: HOFFMANN EITLE
Patent- und Rechtsanwälte
Arabellastrasse 4
81925 München (DE)

# (54) OPTICAL RECORDING MEDIUM AND ITS MANUFACTURING METHOD

(57) Provided is an optical recording medium having a recording layer, an intermediate layer, an adhesive layer and a cover sheet in this order on a substrate, wherein the thickness t 1 of the intermediate layer after a high-temperature high-humidity storage test satisfies the relationship: $0.8t \leq t1 \leq 1.2t$ wherein t is the thickness of the intermediate layer before the high-temperature high-humidity storage test.

Fig. 1

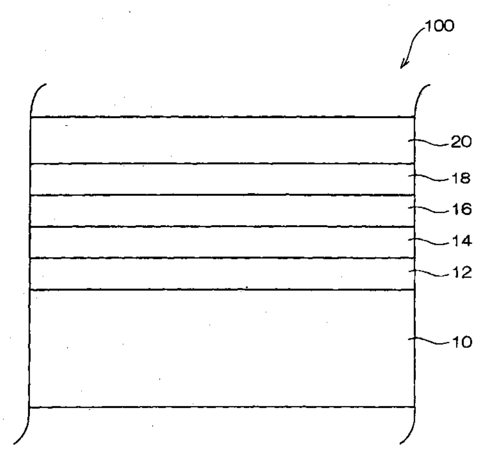


EP 1 876 592 A1

## Description

Technical Field

The present invention relates to an optical recording medium and a method of producing the same. The invention relates in particular to an optical recording medium and more specifically to a heat-mode write-once optical information recording medium. The invention also relates to a write-once optical recording medium having an intermediate layer between a recording layer and a cover sheet and a method of producing the same.

Background Art

Conventionally, an optical recording medium (optical disk) capable of recording information only once with laser light has been known. This optical disk is called write-once CD (so-called CD-R) and typically structured by laminating an organic dye-containing recording layer, a reflective layer containing a metal such as gold, and a protective layer (cover layer) made of resin in this order on a transparent disk-shaped substrate. Recording of information on this CD-R is carried out by irradiating CD-R with laser light of near-infrared region (usually laser light having wavelength in the vicinity of 780 nm), and the irradiated part of the recording layer absorbs the light to increase its temperature locally thereby generating a physical or chemical change (for example, pit formation) to change its optical characteristics in the portion, whereby information is recorded. Reading (reproduction) of information, on one hand, is carried out by irradiating CD-R with laser light having the same wavelength as that of laser light for recording, and then detecting a difference in reflectance between the site (recording part) where the optical characteristics of the recording layer have been changed and the site (non-recording part) where the optical characteristics have not been changed.

In recent years, there is need for an optical recording medium having higher recording density. Toward this need, an optical disk called a write-once digital versatile disk (so-called DVD-R) has been proposed (for example, Nikkei New Media, separate volume, "DVD", published in 1995). This DVD-R is structured by attaching two disks to each other with a recording layer on the inside, wherein each disk usually has an organic dye-containing recording layer, a reflective layer and a protective layer laminated in this order on a transparent disk-shaped substrate on which a guide groove (pre-groove) for tracking the irradiation laser light is formed in groove width as narrow as half or less (0.74 to 0.8 μm) of the groove width of CD-R, or structured by attaching the above disk and a disk-shaped protective substrate having the same shape as that of the disc, to each other with the recording layer on the inside. Recording/reproduction of information on this DVD-R is carried out by irradiating it with visible laser light (usually laser light having a wavelength in the range of 630 to 680 nm) thereby attaining higher-density recording than CD-R.

In recent years, networks such as internet etc. and high-definition television sets are spreading rapidly. In addition, HDTV (High Definition Television) broadcasting has been initiated, and thus high-capacity recording media capable of recording image information inexpensively and easily are required. Although DVD-R at present plays a role sufficiently as high-capacity recording medium, demand for higher capacity and higher density is increasing and the development of recording media coping with such demand is also necessary. Accordingly, higher-capacity recording media capable of recording with high density by a light having a shorter wavelength than that for DVD-R is under development.

For the optical recording medium having an organic dye-containing recording layer, recording/reproduction methods of recording and reproducing information by irradiating laser light having a wavelength of 530 nm or less in the direction of from the recording layer to the reflective layer are known (see, for example, Japanese Patent Application Laid-Open (JP-A) No. 4-74690, JP-A No. 7-304256, JP-A No. 7-304257, JP-A No. 8-127174, JP-A No. 11-53758, JP-A No. 11-334204, JP-ANo. 11-334205, JP-A No. 11-334206, JP-A No. 11-334207, JP-A No. 2000-43423, JP-A No. 2000-108513, JP-A No. 2000-113504, JP-A No. 2000-149320, JP-A No. 2000-158818 and JP-A No. 2000-228028). In these methods, information is recorded and reproduced by irradiating blue (wavelengths 430 nm, 488 nm) or bluish-green (wavelength 515 nm) laser light to an optical disk having a recording layer containing a porphyrin compound, an azo dye, a metal azo dye, a quinophthalone dye, a trimethine cyanine dye, a dicyanovinylphenyl skeleton dye, a coumarin compound, a naphthocyanine compound etc.

On one hand, a phase-change optical disk is known as DVD, and this optical disk uses an alloy layer of GeSbTe etc. as a recording layer, wherein recording/reproduction is carried out by utilizing reflectance varying upon phase change from crystal to amorphous states caused by instant heating of the recording layer with laser light. Recently, a DVR system in which this phase-change DVD is used and recording/reproduction is carried out with a bluish-purple laser was reported (ISOM2000, pp. 210-211). This system has accomplished a certain result for the object of higher density.

When the above optical recording medium has a recording layer consisting of organic matter, there is a problem that when a cover layer is bonded via an adhesive, the organic matter constituting the recording layer is dissolved in the adhesive. This problem can be solved by providing an intermediate layer between the recording layer and the cover layer, but when the thickness of the intermediate layer is uneven or too thick, there is a problem of deterioration in

recording/reproducing characteristics resulting from a reduction in reflectance caused by the intermediate layer.

The quantity of image data is expected to further increase due to initiation of digital high-definition broadcast, and as a consequence, higher capacity and higher data transmission speed also come to be required of the recording media (see, for example, JP-A No. 11-120617). When digital high-definition broadcast is recorded in the home, even DVD±R is said to be insufficient in capacity, so next-generation DVD has been actively developed. For example, a blue-ray disk recorder capable of picture recording and reproduction of BS digital high-definition broadcast for 2 hours has been marketed.

Recording media for this blue-ray disk recorder, which are also simultaneously marketed, are media having a phase-change recording layer. Such phase-change media may require a large-scale vacuum film-making unit for production or may have a complicated layer structure. In consideration of these aspects, write-once blue-ray disk media using an organic dye have been developed to enable production of the recording media more inexpensively even in the next-generation DVD systems including the blue-ray disk. When a technique for making an organic dye into a film by spin coating is adopted, there is an advantage that production facilities used in production of CD-R and DVD-R can be continuously used.

At the same time, the write-once blue-ray disk medium, like conventional CD-R and DVD-R, are desired to have high storage stability.

The write-once blue-ray disk medium is structured for example by laminating a reflective layer, a recording layer and a cover sheet (cover layer) in this order on a substrate. The cover sheet is attached for example via a pressure-sensitive adhesive. To prevent the influence of this pressure-sensitive adhesive on the recording layer, an intermediate layer is usually provided between the pressure-sensitive adhesive and the recording layer (see, for example, JP-A No. 2002-373451). The influence of the pressure-sensitive adhesive on the recording layer is blocked by this intermediate layer. However, the solubility of the intermediate layer in water is so high that this layer is problematic in storage stability against humidity and high temperature, and sometimes the recording characteristics are consequently affected.

As a material of such intermediate layer, a metal oxide is generally used, and a sputtering method is used in formation of the metal oxide film. The sputtering method is typically a method of forming a film on a substrate by applying DC high voltage between the substrate and a metal oxide target as a material of the intermediate layer while introducing argon gas under vacuum, thereby bombarding an ionized argon gas with the target and allowing scattered substances (metal and oxygen) to be formed into a film on the substrate.

Out of the scattered target substances, a part of oxygen is discharged together with argon gas, so the metal oxide film thus formed may be deficient in oxygen to cause a stained oxygen deficiency. This oxygen deficiency may adversely affect the optical performance of the intermediate layer as a metal oxide film, to bring about problems such as worsening of signal waveform, reduction in amplitude, etc.

Depending on sputtering conditions, an oxygen deficiency may be generated in metal oxides, and as a result, metal oxides different in oxidation state different from that of the desired metal oxide may also occur to exert an adverse influence on the appearance of the intermediate layer, recording characteristics, etc.

## SUMMARY OF INVENTION

The present invention was made in view of the conventional problems described above and provides an optical recording medium and a method of producing the same.

An object of the invention is to provide an optical recording medium maintaining recording/reproducing characteristics in a high level.

A first aspect of the invention is to provide an optical recording medium having a recording layer, an intermediate layer, an adhesive layer and a cover sheet in this order on a substrate,

wherein the thickness $t_1$ of the intermediate layer after a high-temperature high-humidity storage test satisfies the relationship "$0.8t \leq t_1 \leq 1.2t$" wherein t is the thickness of the intermediate layer before the high-temperature high-humidity storage test, and the high-temperature high-humidity storage test is a test in which the optical recording medium of the invention including the intermediate layer is stored under conditions of 60°C and 90% RH for 168 hours in a thermostatic chamber and the ratio of change in the thickness of the intermediate layer between before and after the storage is examined.

A second aspect of the invention is to provide a method of producing an optical recording medium comprising a step of forming at least an organic dye-containing recording layer, an intermediate layer and a cover layer on a substrate, wherein the intermediate layer is formed by a sputtering method using a rare gas and oxygen gas as sputtering gas.

A third aspect of the invention is to provide an optical recording medium having at least an organic dye-containing recording layer, an intermediate layer and a cover layer on a substrate,

wherein the intermediate layer is formed by a sputtering method using a rare gas and oxygen gas as sputtering gas.

A fourth aspect of the invention is to provide an optical recording medium having at least an organic dye-containing recording layer, an intermediate layer and a cover layer on a substrate,

wherein the intermediate layer satisfies the following condition expression (1):

$$40\% \leq A/(A+B) \leq 100\% \qquad (1)$$

wherein, in condition expression (1), A represents the proportion of a major component in a stable oxidation state and B represents the proportion of a component in an unstable oxidation state.

A fifth aspect of the invention is to provide an optical recording medium having at least an organic dye-containing recording layer, an intermediate layer and a cover layer on a substrate,
wherein the intermediate layer contains a material satisfying the following condition expression (1):

$$0.8 \leq B/A \leq 1 \qquad (1)$$

wherein in the intermediate layer before and after storage in pure water at 60°C for 2 days, A is the peak intensity before the storage and B is the peak intensity after the storage according to an SEM-EDX elemental analysis.

BRIEF DESCRIPTION OF DRAWINGS

Fig. 1 is a schematic view showing one example of a layer structure in a certain embodiment of the optical recording medium of the present invention.
Fig. 2 is a schematic sectional view showing a layer structure in a certain embodiment of the optical recording medium of the invention.
Fig. 3 is a view showing metal peaks of an intermediate layer in Example 6.
Fig. 4 is a view showing metal peaks of an intermediate layer in Example 7.
Fig. 5 is a view showing metal peaks of an intermediate layer in Example 8.
Fig. 6A is a view showing metal peaks of the surface of an intermediate layer in Example 9.
Fig. 6B is a view showing metal peaks of an intermediate layer two minutes after initiation of sputtering in Example 9.
Fig. 7A is a view showing metal peaks of the surface of an intermediate layer in Example 10.
Fig. 7B is a view showing metal peaks of an intermediate layer two minutes after initiation of sputtering in Example 10.
Fig. 8A is a view showing metal peaks of the surface of an intermediate layer in Example 11.
Fig. 8B is a view showing metal peaks of an intermediate layer two minutes after initiation of sputtering in Example 11.
Fig. 9 is a view showing metal peaks of an intermediate layer in Comparative Example 5.
Fig. 10 is a view showing metal peaks of an intermediate layer in Comparative Example 6.
Fig. 11 is a view showing metal peaks of an intermediate layer in Comparative Example 7.

BEST MODE FOR CARRYING OUT THE INVENTION

Hereinafter, the optical recording medium of the present invention is described in detail. The optical recording medium in a certain embodiment (embodiment A) is an optical recording medium having a recording layer, an intermediate layer, an adhesive layer and a cover sheet in this order on a substrate, which is irradiated from the side of the cover sheet with laser light thereby recording and reproducing information.

The intermediate layer in the optical recording medium in the embodiment described above shows the following characteristics in a high-temperature high-humidity storage test. That is, the thickness $t_1$ of the intermediate layer after a high-temperature high-humidity storage test satisfies the relationship: $0.8t \leq t_1 \leq 1.2t$ wherein t is the thickness of the intermediate layer before the high-temperature high-humidity storage test.

When the relationship $0.8t \leq t_1 \leq 1.2t$ is not satisfied, the optical distance between the surface of the cover layer and the recording layer is changed to fail to maintain initial recording/reproducing characteristics. In the case of "$0.8t > t_1$", the function of the intermediate layer, that is, the barrier effect for the adhesive layer and the recording layer, is eliminated thus permitting mixing of the adhesive layer with the recording layer, to deteriorate recording/reproducing characteristics significantly. Particularly when a dye is contained in the recording layer, there occurs significant deterioration in recording characteristics. The relationship is particularly preferably in the range of $0.9t \leq t_1 \leq 1.1t$, more preferably in the range of $0.9t \leq t_1 \leq 1.05t$.

As used herein, the high-temperature high-humidity storage test is a test wherein the optical recording medium

of the invention including the intermediate layer is stored under conditions of 60°C and 90% RH for 168 hours in a thermostatic chamber and the ratio of change in the thickness of the intermediate layer before and after the storage is examined. The ratio of change in the thickness is determined preferably as follows: First, the optical recording medium is cut into halves (or the same optical recording medium is prepared in duplicate), and one of the halves is stored under the above conditions. Before and after storage, the optical recording medium is cut by an FIB (focused-ion-beam) method, and from a SEM photograph of its cut surface, the average thickness of the intermediate layer is determined, and the ratio of change in the thickness is determined from the thickness t before storage and the thickness $t_1$ after storage. Preferable conditions for FIB are that the apparatus used is "Focused Ion Beam SMI2050" manufactured by Seiko Instruments Inc., and for beam conditions, Ga is used and the accelerating voltage is 30 kV.

The measured position of the optical recording medium shall be the same position before and after storage, and preferably at least 3 sites are measured for each of $t_1$ and t, to determine the thickness as average thickness at these sites. An exemplary means for regulating the ratio of change in thickness in the above range will be described later.

The ratio of change of the intermediate layer is preferably within 20%, more preferably from 0 to 10%, after an acid resistance test. When the intermediate layer is a layer containing an acrylic acid-based adhesive at high proportion or the recording layer (dye) is acidic, the intermediate layer can prevent corrosion with acid, provided that the ratio of change is within 20%.

The acid resistance test of the intermediate layer is carried out preferably in the following manner. That is, the intermediate layer is formed on a glass plate under the same conditions as in producing the optical recording medium (the thickness may vary) and then cut into halves, and one of the halves is dipped in 0.1 N aqueous acetic acid for 1 day in an environment at 60°C. The ratio of change in a peak of an element contained in the intermediate layer (the element is for example "Nb" when the intermediate layer is NbOx) is determined before and after dipping by SEM-EDAX. Preferable conditions for SEM-EDAX are that the unit used is "S-800" manufactured by Hitachi, Ltd., and elements are detected preferably under the optimum accelerating voltage conditions for detection of each element.

The layer constitution of the optical recording medium in this embodiment is illustrated in Fig. 1. The optical recording medium 100 has an arbitrary reflective layer 12, a recording layer 14, an intermediate layer 16, an adhesive layer 18 and a cover sheet 20 in this order on a substrate 10.

The method of producing an optical recording medium in another embodiment (embodiment B) is a method of producing an optical recording medium comprising a step of forming at least an organic dye-containing recording layer, an intermediate layer and a cover layer on a substrate, wherein the intermediate is formed by a sputtering method using a rare gas and oxygen gas as sputtering gas.

The optical recording medium in another embodiment (embodiment C) is an optical recording medium having at least an organic dye-containing recording layer, an intermediate layer and a cover layer on a substrate, wherein the intermediate layer is formed by a sputtering method using a rare gas and oxygen gas as sputtering gas.

A constituent component of the intermediate layer in the embodiments B and C is preferably a metal oxide, and the metal oxide is preferably an Nb oxide or a Ta oxide. The oxide is preferably $Ta_2O_5$, $Nb_2O_5$, NbO or TaO.

In a usual sputtering method using only a rare gas (for example, an argon gas) as sputtering gas as described above, oxygen in metal oxides scattered upon sputtering is discharged together with the rare gas, and thus the number of oxygen atoms in the film formed is reduced, resulting in an oxygen deficiency. This oxygen deficiency appears as stained spots to influence the optical characteristics of the intermediate layer. In this embodiment, therefore, the sputtering gas is previously mixed with oxygen in order to compensate for oxygen discharged together with a rare gas. That is, by using a rare gas and oxygen gas as a sputtering gas, oxygen derived from the metal oxide target and oxygen derived from the sputtering gas are present in the formed film, and by suitably regulating the amount of oxygen in the sputtering gas, the film can be formed at the metal/oxygen ratio in the metal oxide target. A film having a desired metal/oxygen ratio can also be formed by regulating the metal/oxygen ratio in the metal oxide target and the ratio of oxygen in the sputtering gas.

The intermediate layer can be formed by sputtering, for example, a Nb oxide or a Ta oxide as a target. The pressure in forming the intermediate layer is preferably from $1\times10^{-2}$ to $1\times10^{-5}$ mbar, and the rate (sputtering rate) is preferably from 0.1 to 10 nm/sec. The sputtering power is preferably from 0.2 to 4 kW, more preferably from 0.4 to 3 kW, still more preferably from 0.5 to 2.5 kW.

In this embodiment, the sputtering gas uses a rare gas (e.g. Ar) and oxygen gas as described above. The ratio of the flow rate of an oxygen gas to the flow rate of a rare gas (oxygen gas/rare gas) in the sputtering gas is preferably in the range of 1/1 to 1/100, more preferably in the range of 9/10 to 1/100, still more preferably in the range of 8/10 to 1/100. By regulating the ratio of the flow rate of the oxygen gas to the flow rate of the rare gas in the range of 1/1 to 1/100, a stable film can be obtained. From the viewpoint of the flow rate of the gas, the flow rate of the gas, regardless of whether the gas is the rare gas or the oxygen gas, is preferably from 1 to 50 sccm (1 to 50 ml/min). When the target is a metal oxide, the flow rate of the oxygen gas is preferably from 0.1 to 25 sccm, more preferably from 0.2 to 20 sccm, still more preferably from 0.5 to 15 seem. By regulating the flow rate of the oxygen gas in the range of 0.1 to 25 sccm, a stable film can be obtained at a satisfactory film-forming rate.

The rare gas and oxygen gas may be previously mixed as a mixed gas or introduced separately at the time of sputtering. When the metal/oxygen ratio in the metal oxide target in sputtering is close to a stable stoichiometric ratio determined by the valence of the metal, the oxygen gas/rare gas ratio is preferably in the range of 1/2 to 1/100. For example, mention is made of $M_2O$ when M is monovalent, MO when M is divalent, $M_2O_3$ when M is trivalent, $MO_2$ when M is tetravalent, and $M_2O_5$ when M is pentavalent.

In the case of RF sputtering, its tuning (matching) is regulated, whereby REF relative to FWD is regulated to be preferably 10% or less, more preferably 5% or less, still more preferably 2.5% or less.

In the case of DC sputtering, it is preferable to simultaneously use a technique of eliminating the electrification of the target instantly by pulse sputtering or with a chopper or the like.

In this embodiment, the thickness of the intermediate layer is preferably from 1 to 80 nm. By regulating the thickness of the intermediate layer in this range, there can be brought about excellent recording/reproducing characteristics with a sufficient separation between the organic dye in the recording layer and the adhesive layer. The thickness of the intermediate layer is more preferably from 1 to 50 nm, still more preferably from 1.5 to 20 nm.

In the thus prepared optical recording medium in this embodiment, the intermediate layer has fewer stained defects, to exhibit stable temporal stability.

The layer constitution of the optical recording medium in this embodiment is preferably a constitution in which (an intermediate layer), (a reflective layer), (an intermediate layer), a recording layer, an intermediate layer, (an adhesive layer), a cover layer and (a hard coat layer) are provided in this order on a substrate. In addition to these layers, one or more other layers may be provided between the layers for the purpose of improving adhesiveness/recording characteristics/storage ability. In the constitution described above, the layers in parentheses are meant to be layers which may be optionally formed if necessary.

One example of the layer constitution of the optical recording medium in this embodiment is illustrated in Fig. 2. The optical recording medium 10 shown in Fig. 2 comprises a recording layer 14, an intermediate layer 16, an adhesive layer 18 and a cover sheet 20 in this order on a substrate 12.

The optical recording medium in a still other embodiment (embodiment D) is an optical recording medium having at least an organic dye-containing recording layer, an intermediate layer and a cover layer in this order on a substrate, wherein the intermediate layer satisfies the following condition expression (1):

$$40\% \leq A/(A+B) \leq 100\% \qquad (1)$$

wherein, in condition expression (1), A represents the proportion of a major component in a stable oxidation state and B represents the proportion of a component in an unstable oxidation state.

The condition expression (1) is a condition expression for the oxidation state of constituent elements constituting the intermediate layer, and by satisfying the condition expression (1), excellent appearance and excellent recording characteristics can be achieved. The principle for this can be reasoned as follow: That is, as a material of the intermediate layer, metal oxide is generally used, and a sputtering method is used in forming the metal oxide into a film. The sputtering method is typically a method of forming a film on a substrate by applying DC high voltage between the substrate and a metal oxide target as a material of the intermediate layer while introducing argon gas under vacuum, thereby bombarding ionized argon gas with the target and allowing scattered substances (metal and oxygen) to be formed into a film on the substrate. Out of the scattered target substances, a part of the oxygen is discharged together with the argon gas, so the metal oxide film thus formed may be deficient in oxygen to cause a stained oxygen deficiency. This oxygen deficiency may adversely affect the optical performance of the intermediate layer as a metal oxide film, to bring about problems such as worsening of signal waveform, reduction in amplitude, etc. In other words, components in an unstable oxidation state are generated by the oxygen deficiency, and by mixing with such components, the performance of the intermediate layer, and consequently the optical recording medium is adversely affected. In this embodiment, therefore, the ratio between the component in a stable oxidation state and the component in an unstable oxidation state in the intermediate layer is defined as described above. When the ratio of the component in a stable oxidation state is less than 40%, the resulting optical recording medium is inferior in appearance and fails to attain excellent recording characteristics. The phrase "inferior in appearance" refers to a phenomenon in which an uneven brindle pattern occurs on the recording layer. The upper limit of the component in a stable oxidization state is 100% and cannot be higher than 100%.

In the condition expression (1), A/(A+B) is preferably from 55 to 100, more preferably from 80 to 100.

The major component in a stable oxidation state and the component in an unstable oxidation state are preferably metal oxides. Specifically, the metal oxide is preferably an Nb oxide or a Ta oxide. Hereinafter, the respective oxides are described.

[Nb oxide]

The Nb oxide in a stable oxidation state is $Nb_2O_5$ and the Nb oxide in an unstable oxidation state may be NbO or $NbO_2$. In the case ofNb oxide, the following condition expression (2) is preferably satisfied:

$$40\% \leq A/(A+B) \leq 100\% \qquad (2)$$

wherein, in condition expression (2), A represents the proportion of a major component in a stable oxidation state and B represents the proportion of a component in an unstable oxidation state.

When the proportion of the Nb components satisfies the condition expression (2), an excellent appearance and excellent recording characteristics can be achieved. In the condition expression (2) in the case of Nb, A/(A+B) is preferably from 50 to 100, more preferably from 55 to 100.

As the Nb oxide target, it is preferable to use not stoichiometrically stable $Nb_2O_5$ but one having the composition $Nb_2O_{4.83}$. This is because there is an advantage that DC pulse sputtering is feasible by reducing oxygen such as in $Nb_2O_{4.83}$. Not only when Nb oxide is used but also when Ta oxide or another metal oxide is used, the allowable A/(A+B) value tends to decrease when the content of oxygen in the target composition is made lower than in the stoichiometrically most stable composition.

[Ta oxide]

The Ta oxide in a stable oxidation state is $Ta_2O_5$, and the Ta oxide in an unstable oxidation state may be TaO or $TaO_2$. In the case of Ta oxide, the following condition expression (3) is preferably satisified:

$$70\% \leq A/(A+B) \leq 100\% \qquad (3)$$

wherein, in condition expression (3), A represents the proportion of a major component in a stable oxidation state and B represents the proportion of a component in an unstable oxidation state.

When the proportion of the Ta components satisfies the condition expression (3), an excellent appearance and excellent recording characteristics can be achieved. In the condition expression (3) in the case ofTa, A/(A+B) is preferably from 70 to 100, more preferably from 90 to 100.

As the Ta oxide target, stoichiometrically stable $Ta_2O_5$ can be used in RF sputtering. Accordingly, an oxygen deficiency hardly occurs, and the lower limit of the A/(A+B) value is higher than in the case ofNb. Not only when Ta oxide is used but also when Nb oxide or another metal oxide is used, the lower limit of the A/(A+B) value tends to increase when the target composition is made stoichiometrically stable.

Now, the method of measuring the respective components in this embodiment is described.

The composition of from the surface of the optical recording medium to the intermediate layer is analyzed in the direction of depth against sputtering time with an X-ray photoelectron spectrometer (AXIS ULTRA, manufactured by Shimadzu Corporation) to determine the composition of the intermediate layer and the sputtering time from the surface of the optical recording medium to the surface of the barrier layer. The optical recording medium is sputtered for the determined sputtering time thereby exposing the surface of the intermediate layer in the medium. Sputtering starting from the surface of the intermediate layer is conducted for at least 1 minute to such a degree that components in the intermediate layer are not eliminated, thereby exposing an intermediate face of the intermediate layer. A photoelectron spectrometric intensity profile of a major metal component of a major metal in the intermediate face is obtained. The obtained profile is analyzed for its chemical shift to quantify the components, and a peak having a peak center in the binding energy level in the case where the valence electron of the major metal in the intermediate layer is the maximum is regarded as a major component in a stable oxidation state, and a peak having a peak center in other binding energy level is regarded as a component in an unstable oxidation state.

Hereinafter, one example of a means for satisfying the respective condition expressions in this embodiment is shown.

In usual sputtering using only a rare gas (for example, an argon gas) as sputtering gas as described above, oxygen in metal oxides scattered upon sputtering is discharged together with the rare gas, and thus the number of oxygen atoms in the film formed is reduced, resulting in an oxygen deficiency. This oxygen deficiency appears as stained spots to influence the optical characteristics of the intermediate layer. Accordingly, the sputtering gas is previously mixed with oxygen in order to compensate for oxygen discharged together with a rare gas. That is, by using the rare gas and the

oxygen gas as the sputtering gas, oxygen derived from the metal oxide target and oxygen derived from the sputtering gas are present in the formed film, and thus the number of oxygen atoms in the film can be prevented from decreasing.

The intermediate layer can be formed by sputtering, for example, Nb oxide or Ta oxide as a target. The pressure in forming the intermediate layer is from $1\times10^{-2}$ to $1\times10^{-5}$ torr (1.33 Pa to $1.33\times10^{-3}$ Pa), and the rate (sputtering rate) is preferably from 0.1 to 10 nm/sec. The sputtering power is preferably from 0.2 to 4 kW, more preferably from 0.4 to 3 kW, still more preferably from 0.5 to 2.5 kW.

In a sputtering gas using a rare gas and oxygen gas, the ratio of the flow rate of the oxygen gas to the flow rate of the rare gas is preferably in the range of 1/1 to 0/1, more preferably in the range of 0.9/1 to 0.01/1, still more preferably in the range of 0.8/1 to 0.01/1. By regulating the ratio of the flow rate of the oxygen gas to the flow rate of the rare gas in the range of 1/1 to 0/1, a stable film can be obtained. From the viewpoint of the flow rate of the gas, the flow rate of the gas, regardless of whether the gas is the rare gas or the oxygen gas, is preferably from 1 to 50 sccm (1 to 50 ml/min). When the target is a metal oxide, the flow rate of an oxygen gas is preferably from 0.1 to 25 sccm, more preferably from 0.2 to 20 sccm, still more preferably from 0.5 to 15 sccm. By regulating the flow rate of the oxygen gas in the range of 0.1 to 25 sccm, a stable film can be obtained at a satisfactory film-forming rate.
The rare gas and oxygen gas may be previously mixed as a mixed gas or introduced separately at the time of sputtering.

In the case of RF sputtering, its tuning (matching) is regulated, whereby REF relative to FWD is regulated to be preferably 10% or less, more preferably 5% or less, still more preferably 2.5% or less.

In the case of DC sputtering, it is preferable to simultaneously use a technique of eliminating the electrification of the target instantly by pulse sputtering or with a chopper, or the like.

In this embodiment, the thickness of the intermediate layer is preferably from 1 to 80 nm. By regulating the thickness of the intermediate layer in this range, there can be brought about excellent recording/reproducing characteristics with a sufficient separation between the organic dye in the recording layer and the adhesive layer. The thickness of the intermediate layer is more preferably from 1 to 50 nm, still more preferably from 1.5 to 20 nm.

The layer constitution of the optical recording medium in this embodiment is preferably a constitution in which (an intermediate layer), (a reflective layer), (an intermediate layer), a recording layer, an intermediate layer, (an adhesive layer), a cover layer and (a hard coat layer) are provided in this order on a substrate. In addition to these layers, one or more other layers may be provided between the layers for the purpose of improving adhesiveness/recording characteristics/storage ability. In the constitution described above, the layers in parentheses are meant to be layers which may be optionally formed if necessary.

One example of the layer constitution of the optical recording medium in this embodiment is illustrated in Fig. 2. The optical recording medium 10 shown in Fig. 2, similar to the previously shown optical recording medium, comprises a recording layer 14, an intermediate layer 16, an adhesive layer 18 and a cover sheet 20 laminated in this order on a substrate 12.

The optical recording medium in a still other embodiment (embodiment E) is an optical recording medium having at least an organic dye-containing recording layer, an intermediate layer and a cover layer in this order on a substrate, wherein the intermediate layer contains a material satisfying the following condition expression (1):

$$0.8t \leq B/A \leq 1 \qquad (1)$$

wherein in the intermediate layer before and after storage in pure water at 60°C for 2 days, A is the peak intensity of a metal used as a material of the intermediate layer before the storage and B is the peak intensity thereof after the storage according to an SEM-EDX elemental analysis.

The condition expression (1) is a condition for the solubility of the intermediate layer in water, and by satisfying the condition expression (1), the intermediate layer has low solubility in water and is excellent in heat/humidity storage stability to achieve excellent recording characteristics. When B/A is less than 0.8, the intermediate layer is problematic in solubility and fails to attain excellent recording characteristics. B/A is preferably from 0.8 to 1.0, preferably from 0.9 to 1.0. B/A cannot be higher than 1. In the storage test, the thickness may be measured for example in the range of 5 to 100 nm.

The means for satisfying the condition expression (1) above includes selection of a material having lower water solubility as a material of the intermediate layer. From this viewpoint, the intermediate layer is preferably metal oxide. Among metal oxides, water-insoluble metal oxides such as tantalum (V) oxide ($Ta_2O_5$), niobium (V) oxide ($Nb_2O_5$) and SnO can be mentioned, among which tantalum (V) oxide or niobium (V) oxide is particularly preferable.

Hereinafter, one example of the method of forming the intermediate layer capable of satisfying the condition expression (1) above is described. The method of forming a film of metal oxide includes a sputtering method, and in a usual sputtering method, a rare gas (for example an argon gas) only is used as a sputtering gas, and oxygen in metal oxides scattered upon sputtering is discharged together with the rare gas, so the number of oxygen atoms in the film

formed is reduced, resulting in an oxygen deficiency. This oxygen deficiency influences the oxidation state of metal oxides in the formed film. For example, even if a film of water-insoluble $Nb_2O_5$ is desired, water-soluble NbO is formed due to the oxygen deficiency and dissolved during storage under humid and heated conditions.

In consideration of the above problem of conventional technique, for compensating for oxygen discharged together with a rare gas, the sputtering gas is previously mixed with oxygen. That is, by using a rare gas and oxygen gas as a sputtering gas, oxygen derived from the metal oxide target and oxygen derived from the sputtering gas are present in the formed film, thereby preventing the reduction of the number of oxygen atoms in the film.
The oxygen deficiency is also problematic that it appears as stained spots on the surface of the intermediate layer, to influence the optical characteristics of the intermediate layer.

When the intermediate layer is formed by sputtering with Nb oxide or Ta oxide as a target, the pressure in forming the intermediate layer is preferably from $1\times10^{-2}$ to $1\times10^{-5}$ torr (1.33 Pa to $1.33\times10^{-3}$ Pa), and the rate (sputtering rate) is preferably from 0.1 to 10 nm/sec. The sputtering power is preferably from 0.2 to 4 kW, more preferably from 0.4 to 3 kW, still more preferably from 0.5 to 2.5 kW.

In a sputtering gas using a rare gas and oxygen gas, the ratio of the flow rate of the oxygen gas to the flow rate of the rare gas is preferably in the range of 1/1 to 1/100, more preferably in the range of 9/10 to 1/100, still more preferably in the range of 8/10 to 1/100. By regulating the ratio of the flow rate of the oxygen gas to the flow rate of the rare gas in the range of 1/1 to 1/100, a stable film can be obtained at a satisfactory film-forming rate. From the viewpoint of the flow rate of the gas, the flow rate of the gas, regardless of whether the gas is the rare gas or the oxygen gas, is preferably from 1 to 50 sccm (1 to 50 ml/min). When the target is metal oxide, the flow rate of an oxygen gas is preferably from 0.1 to 25 sccm, more preferably from 0.2 to 20 seem, still more preferably from 0.5 to 15 seem. By regulating the flow rate of an oxygen gas in the range of 0.1 to 25 sccm, a stable film can be obtained at a satisfactory film-forming rate. The rare gas and oxygen gas may be mixed previously as a mixed gas or introduced separately at the time of sputtering.

In the case of RF sputtering, its tuning (matching) is regulated, whereby REF relative to FWD is regulated to be preferably 10% or less, more preferably 5% or less, still more preferably 2.5% or less.

In the case of DC sputtering, it is preferable to simultaneously use a technique of eliminating the electrification of the target instantly by pulse sputtering or with a chopper, or the like.

In this embodiment, the thickness of the intermediate layer is preferably from 1 to 80 nm. By regulating the thickness of the intermediate layer in this range, there can be brought about excellent recording/reproducing characteristics with a sufficient separation between the organic dye in the recording layer and the adhesive layer. The thickness of the intermediate layer is more preferably from 1 to 50 nm, still more preferably from 1.5 to 20 nm.

By reducing the solubility of the intermediate layer in water, the optical recording medium can attain an excellent ability to be stored under humid and heated conditions and excellent recording characteristics.

The layer constitution of the optical recording medium in this embodiment is preferably a constitution in which (an intermediate layer), (a reflective layer), (an intermediate layer), a recording layer, an intermediate layer, (an adhesive layer), a cover layer and (a hard coat layer) are provided in this order on a substrate. In addition to these layers, one or more other layers may be provided between the layers for the purpose of improving adhesiveness/recording characteristics/storage ability. In the constitution described above, the layers in parentheses are means to be layers which may be optionally formed if necessary.

One example of the layer constitution of the optical recording medium in this embodiment is illustrated in Fig. 2. The optical recording medium 10 shown in Fig. 2, similar to the previously described one, comprises a recording layer 14, an intermediate layer 16, an adhesive layer 18 and a cover sheet 20 laminated in this order on a substrate 12.
Hereinafter, the substrate and the respective layers are mainly described. The following description applies commonly to the embodiments described above. However, the invention is not limited thereto.

<Substrate>

The substrate used can be arbitrarily selected from various kinds of materials used as substrate materials in conventional optical recording media.
Specific examples can include: glass; acrylic resins such as polycarbonate and polymethyl methacrylate; vinyl chloride resins such as polyvinyl chloride and vinyl chloride copolymers; epoxy resins; amorphous polyolefins; polyesters; and metals such as aluminum. If desired, these can be simultaneously used.
Among the materials described above, polycarbonate and amorphous polyolefin are preferable in respect of moisture resistance, dimensional stability and low price, and polycarbonate is particularly preferable. The thickness of the substrate (the average thickness of a region on which the recording layer is formed) is preferably from 0.5 to 1.4 mm, more preferably $1.1\pm0.3$ mm.

The substrate is provided with a tracking guide groove or concave and convex portions (groove or pre-groove) for indicating information such as address signals. The convex portion of the substrate is called on-groove and the concave portion is called in-groove. The "on-groove" is sometimes referred as herein to "groove". A substrate provided

with a groove having a narrower track pitch than in CD-R or DVD-R is preferably used to achieve higher recording density. The track pitch of the groove is preferably in the range of 300 to 600 nm, 300 to 360 nm, or 310 to 340 nm. In another embodiment, the depth of the groove (groove depth) is in the range of 40 to 150 nm. In another embodiment, the depth of the groove (groove depth) is in the range of 20 to 50 nm, thereby preventing failure in tracking with a reduction in tracking error signals and simultaneously preventing molding from becoming difficult. In the latter embodiment, the depth of the groove (groove depth) is more preferably from 25 to 40 nm.

The half-value width of the on-groove is preferably in the range of 50 to 200 nm. By regulating the half-value width in this range, tracking errors can be reduced and prevented, while jitter can be reduced. The half-value width is more preferably from 70 to 190 nm, still more preferably from 90 to 180 nm.

For the purpose of improving planarity and adhesiveness, an undercoat layer is formed on the surface of a substrate at the side at which a reflective layer described later is provided.

Examples of the material of the undercoat layer can include, for example, polymer materials such as polymethyl methacrylate, an acrylic acid-methacrylic acid copolymer, a styrene-maleic anhydride copolymer, polyvinyl alcohol, N-methylol acrylamide, a styrene-vinyl toluene copolymer, chlorosulfonated polyethylene, nitrocellulose, polyvinyl chloride, chlorinated polyolefin, polyester, polyimide, a vinyl acetate-vinyl chloride copolymer, an ethylene-vinyl acetate copolymer, polyethylene, polypropylene, polycarbonate etc., as well as surface modifiers such as silane coupling agents etc.

The undercoat layer can be prepared by dissolving or dispersing the above material in a suitable solvent to prepare a coating solution and then coating the surface of a substrate with the coating solution by a coating method such as spin coating, dip coating, extrusion coating etc. The thickness of the undercoat layer is generally in the range of 0.005 to 20 μm, preferably in the range of 0.01 to 10 μm.

<Reflective layer>

In the reflective layer, a light reflective material having high reflectance to laser light is used. The reflectance may be 70% or more.

Examples of the light reflective material having high reflectance include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. These light reflective materials may be used alone or in combination of two or more thereof, or as an alloy thereof. Among these materials, Cr, Ni, Pt, Cu, Ag, Au, Al and stainless steel are preferable. Au, Ag, A1 or alloys thereof are particularly preferable, and Au, Ag or an alloy thereof (the content ofAg may be 50 mass% or more) is most preferable.

The reflective layer can be formed on a substrate, for example by deposition, sputtering or ion-plating of the light reflective material described above. The thickness of the reflective layer is generally in the range of 10 to 300 nm, preferably in the range of 50 to 200 nm. The reflective layer is not always necessary when the reflectance of the following recording layer is sufficiently high.

<Recording layer>

In certain embodiments (applicable embodiments include, but are not limited to, the embodiment A), the recording layer is preferably a layer which is formed on a substrate or the above reflective layer and which contains at least an organic matter (dye) capable of recording/reproduction of information with laser light having a wavelength of 380 to 500 nm with a lens numerical aperture (NA) of 0.7 or more.

The organic matter is selected from a triazole compound, a phthalocyanine compound, a porphyrin-based compound, an aminobutadiene-based compound, a cyanine-based compound, an oxonol compound (oxonol dye) etc., and is preferably at least one member of these compounds. Particularly, a phthalocyanine dye and an oxonol dye are preferable.

Further, dyes described in JP-A No. 4-74690, JP-A No. 8-127174, JP-A No. 11-53758, JP-A No. 11-334204, JP-A No. 11-334205, JP-A No. 11-334206, JP-A No. 11-334207, JP-A No. 2000-43423, JP-A No. 2000-108513 and JP-A No. 2000-158818 can be simultaneously used.

The organic matter is not limited to the dyes described above, and organic compounds such as a triazole compound, a triazine compound, a cyanine compound, a merocyanine compound, an aminobutadiene compound, a phthalocyanine compound, a cinnamic acid compound, a viologen compound, an azo compound, an oxonol benzoxazole compound, a benzotriazole derivative etc. can also be preferably used. Among these compounds, a benzotriazole derivative and a phthalocyanine compound are particularly preferable.

Hereinafter, a phthalocyanine dye and an oxonol dye, which are particularly preferable dyes, are described.

The phthalocyanine dye preferably has a structure represented by the following formula (A):

Formula (A)

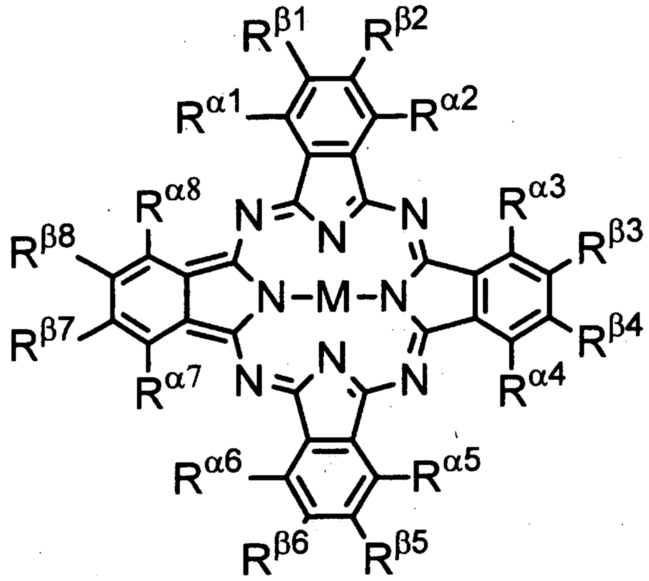

In the formula (A) above, $R\alpha^1$ to $R\alpha^8$ and $R\beta^1$ to $R\beta^8$ each independently represent a hydrogen atom, a halogen atom, a cyano group, a nitro group, a formyl group, a carboxyl group, a sulfo group, a C 1 to C20 substituted or unsubstituted alkyl group, a C6 to C 14 substituted or unsubstituted aryl group, a C to C10 substituted or unsubstituted heterocyclic group, a C1 to C20 substituted or unsubstituted alkoxy group, a C6 to C14 substituted or unsubstituted aryloxy group, a C2 to C21 substituted or unsubstituted acyl group, a C 1 to C20 substituted or unsubstituted alkylsulfonyl group, a C6 to C 14 substituted or unsubstituted arylsulfonyl group, a C1 to C10 heterylsulfonyl group, a C1 to C25 substituted or unsubstituted carbamoyl group, a C0 to C32 substituted or unsubstituted sulfamoyl group, a C2 to C20 substituted or unsubstituted alkoxycarbonyl group, a C7 to C 15 aryloxycarbonyl group, a C2 to C21 substituted or unsubstituted acylamino group, or a C1 to C20 substituted or unsubstituted sulfonylamino group. Not all $R\alpha^1$ to $R\alpha^8$ are hydrogen atoms, and at least 8 of $R\alpha^1$ to $R\alpha^8$ and $R\beta^1$ to $R\beta^8$ are hydrogen atoms. M represents 2 hydrogen atoms, a divalent to tetravalent metal atom, a divalent to tetravalent oxy metal atom, or a divalent to tetravalent atom having a ligand.

In the formula (A), $R\alpha^1$ to $R\alpha^8$ and $R\beta^1$ to $R\beta^8$ are preferably independently selected from a hydrogen atom, a halogen atom, a carboxyl group, a sulfo group, a C1 to C16 substituted or unsubstituted alkyl group (for example, methyl, ethyl, n-propyl, i-propyl), a C6 to C14 substituted or unsubstituted aryl group (for example, phenyl, p-methoxyphenyl, p-octadecylphenyl), a C1 to C16 substituted or unsubstituted alkoxy group (for example, methoxy, ethoxy, n-octyloxy), a C6 to C10 substituted or unsubstituted aryloxy group (for example, phenoxy, p-ethoxyphenoxy), a C1 to C20 substituted or unsubstituted alkylsulfonyl group (for example, methanesulfonyl, n-propylsulfonyl, n-octylsulfonyl), a C6 to C14 substituted or unsubstituted arylsulfonyl group (for example, toluenesulfonyl, benzenesulfonyl), a C0 to C20 substituted or unsubstituted sulfamoyl group (methylsulfamoyl group, n-butylsulfamoyl), a C 1 to C17 alkoxycarbonyl group (for example, methoxycarbonyl, n-butoxycarbonyl), a C7 to C15 substituted or unsubstituted aryloxycarbonyl group (for example, phenoxycarbonyl, m-chlorophenylcarbonyl), a C2 to C21 substituted or unsubstituted acylamino group (for example, acetylamino, pivaloylamino, n-hexylamino), and a C1 to C18 sulfonylamino group (for example, methanesulfonylamino, n-butanesulfonylamino).

Particularly, $R\alpha^1$ to $R\alpha^8$ and $R\beta^1$ to $R\beta^8$ are more preferably independently selected from a hydrogen atom, a halogen atom, a carboxyl group, a sulfo group, a C1 to C16 substituted or unsubstituted alkyl group, a C 1 to C16 substituted or unsubstituted alkoxy group, a C1 to C20 alkylsulfonyl group, a C6 to C14 substituted or unsubstituted arylsulfonyl group, a C2 to C20 sulfamoyl group, a C 1 to C 13 alkoxycarbonyl group, a C2 to C21 substituted or unsubstituted acylamino group and a C 1 to C18 sulfonylamino group.

More preferably, $R\alpha^1$ to $R\alpha^8$ are independently selected from a hydrogen atom, a halogen atom, a sulfo group, a C 1 to C16 substituted or unsubstituted alkoxy group, a C1 to C20 substituted or unsubstituted alkylsulfonyl group, a C6 to C 14 substituted or unsubstituted arylsulfonyl group, a C2 to C20 substituted or unsubstituted sulfamoyl group, a C2 to C12 acylamino group and a C1 to C18 sulfonylamino group, and $R\beta^1$ to $R\beta^8$ are independently selected from a hydrogen and a halogen atom.

In a particularly preferable embodiment, $R\alpha^1$ to $R\alpha^8$ each independently represent a hydrogen atom, a sulfo group, a C1 to C20 unsubstituted alkylsulfonyl group, a C6 to C14 unsubstituted arylsulfonyl group or a C7 to C20 unsubstituted sulfamoyl group, and $R\beta^1$ to $R\beta^8$ each represent a hydrogen atom.

In the formula (A), it is preferable that four substituents in total, that is, either of $R\alpha^1$ or $R\alpha^2$, either of $R\alpha^3$ or $R\alpha^4$, either of $R\alpha^5$ or $R\alpha^6$, and either of $R\alpha^7$ or $R\alpha^8$, are not simultaneously hydrogen atoms.

In the formula (A), $R\alpha^1$ to $R\alpha^8$ and $R\beta^1$ to $R\beta^8$ may further have substituents, and examples of such substituents capable of introduction can include:

a C1 to C20 chain or cyclic substituted or unsubstituted alkyl group (for example, a methyl group, ethyl group, isopropyl group, cyclohexyl group, benzyl group, phenethyl group), a C6 to C18 substituted or unsubstituted aryl group (for example, a phenyl group, chlorophenyl group, 2,4-di-t-amylphenyl group, 1-naphthyl group), a C2 to C20 substituted or unsubstituted alkenyl group (for example, a vinyl group, 2-methylvinyl group), a C2 to C20 substituted or unsubstituted alkynyl group (for example, an ethynyl group, 2-methylethynyl group, 2-phenylethynyl group), a halogen atom (for example, F, Cl, Br, I), a cyano group, a hydroxyl group, a carboxyl group, a C2 to C20 substituted or unsubstituted acyl group (for example, an acetyl group, benzoyl group, salicyloyl group, pivaloyl group), a C1 to C20 substituted or unsubstituted alkoxy group (for example, a methoxy group, butoxy group, cyclohexyloxy group), a C6 to C20 aryloxy group (for example, a phenoxy group, 1-naphtoxy group, p-methoxyphenoxy group), a C1 to C20 substituted or unsubstituted alkylthio group (for example, a methylthio group, butylthio group, benzylthio group, 3-methoxypropylthio group), a C6 to C20 substituted or unsubstituted arylthio group (for example, a phenylthio group, 4-chlorophenylthio group), a C1 to C20 substituted or unsubstituted alkylsulfonyl group (for example, a methanesulfonyl group, butanesulfonyl group),

a C6 to C20 substituted or unsubstituted arylsulfonyl group (for example, a benzenesulfonyl group, paratoluenesulfonyl group), a C1 to C17 substituted or unsubstituted carbamoyl group (for example, an unsubstituted carbamoyl group, methylcarbamoyl group, ethylcarbamoyl group, n-butylcarbamoyl group, dimethylcarbamoyl group), a C1 to C16 substituted or unsubstituted acylamino group (for example, an acetylamino group, benzoylamino group), a C2 to C10 substituted or unsubstituted acyloxy group (for example, an acetoxy group, benzoyloxy group), a C2 to C10 substituted or unsubstituted alkoxycarbonyl group (for example, a methoxycarbonyl group, ethoxycarbonyl group), and a 5- or 6-memberred substituted or unsubstituted heterocyclic group (for example, an aromatic heterocyclic group such as a pyridyl group, thienyl group, furyl group, thiazolyl group, imidazolyl group, pyrazolyl group etc.; a heterocyclic group such as a pyrrolidine cyclic group, piperidine cyclic group, morpholine cyclic group, pyran cyclic group, thiopyran cyclic group, dioxane cyclic group, dithiolane cyclic group etc.).

Preferable substituents which can be introduced into $R\alpha^1$ to $R\alpha^8$ and $R\beta^1$ to $R\beta^8$ include a C1 to C16 chain or cyclic substituted or unsubstituted alkyl group, a C6 to C14 substituted or unsubstituted aryl group, a C1 to C16 substituted or unsubstituted alkoxy group, a C6 to C14 substituted or unsubstituted aryloxy group, a halogen atom, a C2 to C17 substituted or unsubstituted alkoxycarbonyl group, a C1 to C10 substituted or unsubstituted carbamoyl group, and a C1 to C 10 substituted or unsubstituted acylamino group.

More preferable examples of the substituents include a C1 to C10 chain or cyclic alkyl group, a C6 to C10 substituted or unsubstituted aryl group, a C1 to C10 substituted or unsubstituted alkoxy group, a C6 to C10 substituted or unsubstituted aryloxy group, a chlorine atom, a C2 to C11 substituted or unsubstituted alkoxycarbonyl group, a C1 to C7 substituted or unsubstituted carbamoyl group, and a C1 to C8 substituted or unsubstituted acylamino group.

Further more preferable examples of the substituents include a C1 to C8 chain and branched or cyclic substituted or unsubstituted alkyl group, a C1 to C8 substituted or unsubstituted alkoxy group, a C3 to C9 substituted or unsubstituted alkoxycarbonyl group, a phenyl group and a chlorine atom.
The most preferable example of the substituent is a C1 to C6 unsubstituted alkoxy group.

In the formula (A), M is preferably a divalent to tetravalent metal atom, more preferably a copper atom, a nickel atom or a palladium atom, still more preferably a copper atom or a nickel atom, further more preferably a copper atom.

The compounds (phthalocyanine dyes) represented by the formula (A) may be bound to one another at arbitrary positions to form a multimer, and the respective units in this case may be the same or different. The compound represented by the formula (A) may be bound to a polymer chain such as polystyrene, polymethacrylate, polyvinyl alcohol, cellulose etc.

Preferable examples of the phthalocyanine dye represented by the formula (A) are shown below, but the invention is not limited thereto.

In Tables 1 to 7, an indication "$R^x/R^y$" (x and y represent any of $\alpha1$ to $\alpha8$ and $\beta1$ to $\beta8$) refers to either $R^x$ or $R^y$, and thus a compound given this indication is a mixture of isomers different in substitution position. When the compound is unsubstituted, that is, when the compound is substituted with hydrogen atoms, the indication is omitted.

Table 1

| No. | Substituent positions and substituents | M |
|---|---|---|
| (1) | $R^{\alpha 1}/R^{\alpha 2}$, $R^{\alpha 3}/R^{\alpha 4}$, $R^{\alpha 5}/R^{\alpha 6}$ $R^{\alpha 7}/R^{\alpha 8}$ $-SO_2N(C_5H_{11}$-*i*$)_2$ | Cu |
| (2) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2NH$(2-*s*-butoxy-5-*t*-amylphenyl) | Cu |
| (3) | $R^{\alpha 1}/R^{\alpha a2}$, $R^{\alpha 3}/R^{\alpha 4}$, $R^{\alpha 5}/R^{\alpha 6}$ $-SO_2NH\{(CH_2)_3O$(2,4-d i-*t*-amylphenyl)} $R^{\alpha 7}/R^{\alpha 8}$ $-SO_3H$ | Cu |
| (4) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2N$(3-methoxypropyl)$_2$ | Ni |
| (5) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2N(CH_3)$(cyclohexyl) | Ni |
| (6) | $R^{\alpha 1}/R^{\alpha 2}$, $R\alpha^{3}/R^{\alpha 4}$, $R^{\alpha 5}/R^{\alpha 6}$, $R^{\alpha 7}/R^{\alpha 8}$ $-SO_2N$(3-*i*-propoxyphenyl)$_2$ | Ni |
| (7) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2NH$(2-*i*-amyloxycarbonylphenyl) | Pd |
| (8) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2NH$(2,4,6-trimethylphenyl) | Pd |
| (9) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2$(4-morpholino) | Co |
| (10) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2N(C_2H_5)$(4-fluorophenyl) | Fe |
| (11) | $R^{\alpha 1}/R^{\alpha 2}$ $R^{\alpha 3}/R^{\alpha 4}$, $R^{\alpha 5}/R^{\alpha 6}$ $-SO_2NH\{(CH_2)_3N(C_2H_5)_2\}$ | Cu |

Table 2

| No. | Substituent positions and substituents | M |
|---|---|---|
| (12) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2$(2-*n*-propoxyphenyl) | Cu |
| (13) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2$(2-*n*-butoxy-5-*t*-butylphenyl) | Ni |
| (14) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2$(2-methoxycarbonylphenyl) | Co |
| (15) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2(CH_2)_4O$(2-chloro-4-*t*-amylphenyl) | Cu |
| (16) | $R^{\alpha 1}/R^{\alpha 2}$ $R^{\alpha 3}/R^{\alpha 3}$, $R^{\alpha 5}/R^{\alpha 6}$, $R^{\alpha 7}/R^{\alpha 8}$ $-SO_2(CH_2)_2CO_2C_4H_9$-*i* | Pd |
| (17) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2$(cyclohexyl) | Cu |
| (18) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2${4-(2-*s*-butoxybenzoylamino)phenyl} | Ni |
| (19) | $R^{\alpha 1}/R^{\alpha 2}$, $R^{\alpha 3}/R^{\alpha 4}$, $R^{\alpha 5}/R^{\alpha 6}$ $-SO_2$(2,6-dichloro-4-methoxyphenyl) | Pd |
| (20) | $R^{\alpha 1}/R^{\alpha 2}$, $R^{\alpha 3}/R^{\alpha 4}$, $R^{\alpha 5}/R^{\alpha 6}$ $-SO_2CH$ $(CH_3)$ $\{CO_2CH_2-CH(C_2H_5)C_4H_9$-*n*} | Mg |
| (21) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2${2-(2-ethoxyethoxy)-phenyl} $R^{\beta 1}/R^{\beta 2}$, $R^{\beta 3}/R^{\beta 4}$, $R^{\beta 5}/R^{\beta 6}$, $R^{\beta 7}/R^{\beta 8}$ $-C_2H_5$ | Zn |
| (22) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-SO_2N\{CH_2CH_2O(CH_3)\}_2$ | Cu |

Table 3

| No. | Substituent positions and substituents | M |
|---|---|---|
| (23) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-OCH_2CH(C_2H_5)(C_4H_9$-*n*) | Ni |
| (24) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-OCH(CH_3)$(phenyl) | Zn |
| (25) | $R^{\alpha 1}$, $R^{\alpha 2}$, $R^{\alpha 3}$, $R^{\alpha 4}$, $R^{\alpha 5}$, $R^{\alpha 6}$, $R^{\alpha 7}$, $R^{\alpha 8}$ -OCH(*s*-butyl)$_2$ | Cu |
| (26) | $R^{\alpha 1}$, $R^{\alpha 2}$, $R^{\alpha 3}$, $R^{\alpha 4}$, $R^{\alpha 5}$, $R^{\alpha 6}$, $R^{\alpha 7}$, $R^{\alpha 8}$ $-OCH_2CH_2OC_3H_7$-*i* | $SiCl_2$ |
| (27) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ -*t*-amyl $R^{\beta 1}/R^{\beta 2}$, $R^{\beta 3}/R^{\beta 4}$, $R^{\beta 5}/R^{\beta 6}$, $R^{\beta 7}/R^{\beta 8}$ -Cl | Ni |
| (28) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ -2,6-di-ethoxyphenyl | Zn |
| (29) | $R^{\alpha 1}/R^{\alpha 2}$, $R^{\alpha 3}/R^{\alpha 4}$, $R^{\alpha 5}/R^{\alpha 6}$ $-SO_2NHCH_2CH_2OC_3H_7$- *i* $R^{\alpha 7}/R^{\alpha 8}$ $-SO_3H$ | Cu |
| (30) | $R^{\alpha 1}/R^{\alpha 2}$, $R^{\alpha 3}/R^{\alpha 4}$ $R^{\alpha 5}/R^{\alpha 6}$ $-CO_2CH_2CH_2OC_2H_5$ $R^{\alpha 7}/R^{\alpha 8}$ $-CO_2H$ | Cu |
| (31) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-CO_2CH(CHg)(CO_2C_3H_7$- *i*) | Co |
| (32) | $R^{\alpha 1}/R^{\alpha 2}$, $R^{\alpha 3}/R^{\alpha 4}$, $R^{\alpha 5}/R^{\alpha 6}$, $R^{\alpha 7}/R^{\alpha 8}$ $-CONHCH_2CH_2OC_3H_7$- *i* | Cu |

Table 4

| No. | Substituent positions and substituents | M |
|---|---|---|
| (33) | $R^{\alpha1}/R^{\alpha2}$, $R^{\alpha3}/R^{\alpha4}$, $R^{\alpha5}/R^{\alpha6}$ $-CON(CH_2CH_2OC_4H_9\text{-}n)_2$ $R^{\alpha7}/R^{\alpha8}$ $-CO_2H$ | Pd |
| (34) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-NHCOCH(C_2H_5)(C_4H_9\text{-}n)$ | Co |
| (35) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ -NHCO(2-*n*-butoxycarbonylphenyl) | Mg |
| (36) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-NHSO_2$(2-*i*-propoxyphenyl) | Pd |
| (37) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-NHSO_2$(2-n-butoxy-5-*t*-amylphenyl) | Zn |
| (38) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2CH_3$ | Ni |
| (39) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2CH(CH_3)_2$ | Cu |
| (40) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C_4H_9\text{-}s$ | Zn |
| (41) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2CH_2CO_2CH(CH_3)_2$ | Cu |
| (42) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2CH(CH_3)(CO_2CH_3)$ | Cu |
| (43) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C_6H_5$ | Cu |
| (44) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2N(C_5H_{11}\text{-}i)_2$ | Cu |

Table 5

| No. | Substituent positions and substituents | M |
|---|---|---|
| (45) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C_4H_9$-s | Cu |
| (46) | $R^{\alpha1}/R^{\alpha2}$, $R^{\alpha3}/R^{\alpha4}$ $R^{\alpha5}/R^{\alpha6}$, $R^{\alpha7}/R^{\alpha8}$ $-SO_2C(CH_3)_3$ | Cu |
| (47) | $R^{\alpha1}/R^{\alpha2}$ $R^{\alpha3}/R^{\alpha4}$, $R^{\alpha5}/R^{\alpha6}$ $R^{\alpha7}/R^{\alpha8}$ $-SO_2C(CH3)_2\{CH_2C(CH_3)_3\}$ | Cu |
| (48) | $R^{\alpha1}/R^{\alpha2}$, $R^{\alpha3}/R^{\alpha4}$ $R^{\alpha5}/R^{\alpha6}$, $R^{\alpha7}/R^{\alpha8}$ $-SO_2C(CH_3)_2(CO_2C_2H_5)$ | Cu |
| (49) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2(OCH_3)$ | Cu |
| (50) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2(CN)$ | Cu |
| (51) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2CF_2CF_2CF_3$ | Cu |
| (52) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2$ $\{CH_2CH_2CO_2$ (phenyl)$\}$ | Cu |
| (53) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2$ {CO (phenyl) } | Cu |
| (54) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2(CH_2CH_3)$ | Cu |
| (55) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_3$ | Pd |
| (56) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_3$ | $SiCl_2$ |
| (57) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_2(CO_2C_2H_5)$ | Ni |

Table 6

| No. | Substituent positions and substituents | M |
|---|---|---|
| (58) | $R^{\beta1}/R^{\beta2}$, $R^{\beta3}/R^{\beta4}$, $R^{\beta5}/R^{\beta6}$, $R^{\beta7}/R^{\beta8}$ $-SO_2C(CH_3)_3$ | Cu |
| (59) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_3$ $R^{\beta1}/R^{\beta2}$, $R^{\beta3}/R^{\beta4}$, $R^{\beta5}/R^{\beta6}$, $R^{\beta7}/R^{\beta8}$ -Br | Cu |
| (60) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $R^{\beta1}/R^{\beta2}$ $R^{\beta3}/R^{\beta4}$, $R^{\beta5}/R^{\beta6}$, $R^{\beta7}/R^{\beta8}$ $-SO_2C(CH_3)_3$ | Cu |
| (61) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C$ (1-Methylcyclohexyl)$_3$ | Cu |
| (62) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_3$ | V= 0 |
| (63) | $R^{\alpha1}/R^{\alpha2}$, $R^{\alpha3}/R^{\alpha4}$ $R^{\alpha5}/R^{\alpha6}$, $R^{\alpha7}/R^{\alpha8}$ $-SO_2C(CH_3)_3$ | Co |
| (64) | $R^{\alpha1}/R^{\alpha2}$ $R^{\alpha3}/R^{\alpha4}$ $R^{\alpha5}/R^{\alpha6}$, $R^{\alpha7}/R^{\alpha8}$ $-SO_2C(CH_3)_3$ | Mg |
| (65) | $R^{\alpha1}/R^{\alpha2}$, $R\alpha^{3}/R^{\alpha4}$, $R^{\alpha5}/R^{\alpha6}$, $R^{\alpha7}/R^{\alpha8}$ $-SO_2C(CH_3)_3$ | A1 |
| (66) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-SO_2C(CH_3)_3$ | Zn |
| (67) | $R^{\alpha1}/R^{\alpha2}$ $R^{\alpha3}/R^{\alpha4}$, $R^{\alpha5}/R^{\alpha6}$, $R^{\alpha7}/R^{\alpha8}$ $-OCH\{CH(CH_3)_2\}_2$ | Cu |
| (68) | $R^{\alpha1}/R^{\alpha2}$, $R^{\alpha3}/R^{\alpha4}$, $R^{\alpha5}/R^{\alpha6}$, $R^{\alpha7}/R^{\alpha8}$ $-OCH\{CH(CH_3)_2\}_2$ $R^{\alpha1}/R^{\alpha2}$, $R^{\alpha3}/R^{\alpha4}$, $R^{\alpha5}/R^{\alpha6}$, $R^{\alpha7}/R^{\alpha8}$ -Br | Cu |

Table 7

| No. | Substituent positions and substituents | M |
|---|---|---|
| (69) | $R^{\alpha1}/R^{\alpha2}$ $R^{\alpha3}/R^{\alpha4}$, $R^{\alpha5}/R^{\alpha6}$, $R^{\alpha7}/R^{\alpha8}$ $-OCH\{CH(CH_3)_2\}_2$ | Pd |
| (70) | $R^{\alpha1}/R^{\alpha2}$, $R^{\alpha3}/R^{\alpha4}$, $R^{\alpha5}/R^{\alpha6}$ $-SO_2C(CH_3)_3$ $R^{\alpha7}/R^{\alpha8}$ $-OCH\{CH(CH_3)_2\}_2$ | Cu |
| (71) | $R^{\alpha1}/R^{\alpha2}$, $R^{\alpha3}/R^{\alpha4}$, $R^{\alpha5}/R^{\alpha6}$ $-SO_2C(CH_3)_3$ $R^{\alpha7}/R^{\alpha8}$ $-OCH\{CH(CH_3)_2\}_2$ $R^{\alpha7}/R^{\alpha8}$ -Br | Cu |

Phthalocyanine dyes represented by the formula (A), when used as the dye contained in the dye recording layer in the invention, may be used alone or as a mixture of dyes different in structure, or in combination with another dye. For preventing crystallization of the dye recording layer, a mixture of isomers different in substituent position is particularly preferably used.

The oxonol dye in the invention is defined as polymethine dye having an anionic chromophore. It is particularly preferable to use an oxonol dye represented by the following formula (I) because of its excellent recording characteristics:

Formula (I)

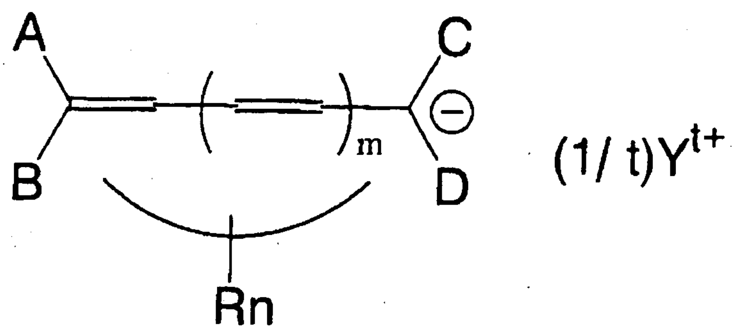

In the formula (1), A, B, C and D are such electron-withdrawing groups that the total of Hammett's σp values ofA and B and the total of Hammett's σp values of C and D are 0.6 or more respectively, and A and B, or C and D, may be bound to each other to form a ring, R represents a substituent on the methine carbon, m is an integer of 0 to 3, n is an integer of 0 to 2m + 1, and when n is an integer of 2 or more, a plurality of R's may be the same or different and may be bound to one another to form a ring, $Y^{t+}$ represents a t-valent cation, and t is an integer of 1 to 10.

The compound of the formula (I) includes a plurality of tautomers resulting from a difference in the position of anion localization, and particularly when A, B, C or D is -CO-E (E is a substituent), the compound is generally expressed with the negative charge localized on the oxygen atom. For example, when D is -CO-E, the compound is represented generally by formula (II) below, and such a compound is also included in the scope of the formula (I).

Formula (II)

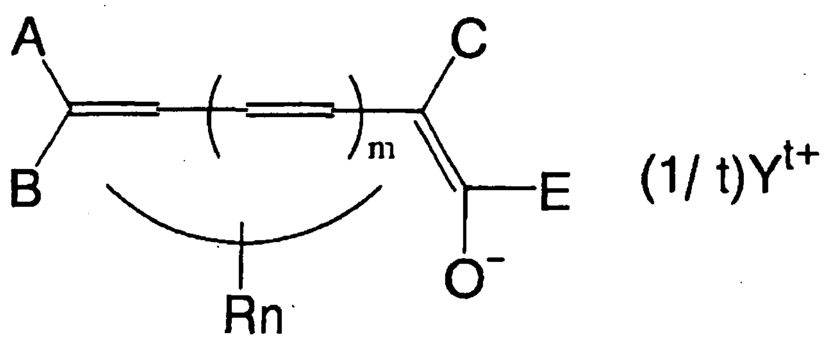

In formula (II), A, B, C, R, m, n, $Y^{t+}$, and t have the same definitions as defined in the formula (I).

Hereinafter, the oxonol dye represented by the formula (I) is described. In the formula (II), A, B, C and D each represent such an electron-withdrawing group that the total of Hammett's substituent constant σp values of A and B and the total of Hammett's substituent constant σp values of C and D are 0.6 or more respectively. A, B, C and D may be the same or different. A and B, or C and D, may be bound to each other to form a ring. Preferably, the Hammett's substituent constant σp values of electron-withdrawing groups represented by A, B, C and D are independently in the range of 0.30 to 0.85 respectively, more preferably in the range of 0.35 to 0.80.

The Hammett's substituent constant σp value (referred to hereinafter as σp value) is described in, for example, Chem. Rev. 91, 165 (1991) and references cited therein, and op values of those not shown therein can be determined by the method described in the above literature. When A and B (or C and D) are bound to each other to form a ring, the σp value of A (or C) is the σp value of an -A-B-H (or -C-D-H) group, and the σp value of B (or D) is the σp value of a -B-A-H (or -D-C-H) group. In this case, the σp values of the two are different due to difference in bond direction.

Preferable examples of the electron-withdrawing groups represented by A, B, C and D can include a cyano group, a nitro group, a C1 to C 10 acyl group (for example, acetyl, propionyl, butyryl, pivaloyl, benzoyl), a C2 to C12 alkoxycarbonyl group (for example, methoxycarbonyl, ethoxycarbonyl, isopropoxycarbonyl, butoxycarbonyl, decyloxycarbonyl), a C7 to C11 aryloxycarbonyl group (for example, phenoxycarbonyl), a C1 to C 10 carbamoyl group (for example, methylcarbamoyl, ethylcarbamoyl, phenylcarbamoyl), a C1 to C10 alkylsulfonyl group (for example, methanesulfonyl), a C6 to C10 arylsulfonyl group (for example, benzenesulfonyl), a C1 to C10 alkoxysulfonyl group (for example, methoxysulfonyl), a C1 to C 10 sulfamoyl group (for example, ethylsulfamoyl, phenylsulfamoyl), a C1 to C10 alkylsulfinyl group (for example, methanesulfinyl, ethanesulfinyl), a C6 to C10 arylsulfinyl group (for example, benzenesulfinyl), a C1 to C10 alkylsulphenyl group (for example, methanesulphenyl, ethanesulphenyl), a C6 to C10 arylsulphenyl group (for example, benzenesulphenyl), a halogen atom, a C2 to C10 alkynyl group (for example, ethynyl), a C2 to C10 diacylamino group (for example, diacetylamino), a phosphoryl group, a carboxyl group, and a 5- to 640-memberred heterocyclic group (for example, 2-benzothiazolyl, 2-benzoxazolyl, 3-pyridyl, 5-(1H)-tetrazolyl, 4-pyrimidyl).

In the formula (I), examples of the substituent represented by R on the methine carbon can include, for example:

a C1 to C20 chain or cyclic alkyl group (for example, methyl, ethyl, n-propyl, isopropyl, n-butyl), a C6 to C18 substituted or unsubstituted aryl group (for example, phenyl, chlorophenyl, anisyl, tolyl, 2,4-di-t-amyl, 1-naphthyl), an alkenyl group (for example, vinyl, 2-methylvinyl), an alkynyl group (for example, ethynyl, 2-methylethynyl, 2-phenylethynyl), a halogen atom (for example, F, Cl, Br, I), a cyano group, a hydroxyl group, a carboxyl group, an acyl group (for example, acetyl, benzoyl, salicyloyl, pivaloyl), an alkoxy group (for example, methoxy, butoxy, cyclohexyloxy), an aryloxy group (for example, phenoxy, 1-naphtoxy), an alkylthio group (for example, methylthio, butylthio, benzylthio, 3-methoxypropylthio), an arylthio group (for example, phenylthio, 4-chlorophenylthio),

an alkylsulfonyl group (for example, methanesulfonyl, butanesulfonyl), an arylsulfonyl group (for example, benzenesulfonyl, paratoluenesulfonyl), a C1 to C10 carbamoyl group, a C1 to C10 amide group, a C2 to C12 imide group, a C2 to C 10 acyloxy group, a C2 to C10 alkoxycarbonyl group, and a heterocyclic group (for example, an aromatic heterocyclic ring such as pyridyl, thienyl, furyl, thiazolyl, imidazolyl, pyrazolyl etc.; an aliphatic heterocyclic ring such as a pyrrolidine ring, piperidine ring, morpholine ring, pyran ring, thiopyran ring, dioxane ring, dithiolane ring etc.).

R is preferably a halogen atom, a C 1 to C8 chain or cyclic alkyl group, a C6 to C 10 aryl group, a C1 to C8 alkoxy group, a C6 to C10 aryloxy group, a C3 to C10 heterocyclic group, particularly preferably a chlorine atom, a C1 to C4 alkyl group (for example, methyl, ethyl, isopropyl), phenyl, a C1 to C4 alkoxy group (for example, methoxy, ethoxy), phenoxy, or a C4 to C8 nitrogen-containing heterocyclic group (for example, 4-pyridyl, benzoxazol-2-yl, benzothiazol-2-yl).

n is an integer of 0 to 2m + 1, and when n is an integer of 2 or greater, a plurality of R's may be the same or different and may be bound to one.another to form a ring. This ring is preferably a 4- to 8-memberred ring, particularly preferably a 5- or 6-memberred ring, and the constituent atoms in the ring is each preferably a carbon atom, an oxygen atom or a nitrogen atom, particularly preferably a carbon atom.

A, B, C, D and R may further have a substituent, and examples of the substituent can include substituents mentioned above as monovalent substituents represented by R in the formula (I).

From the viewpoint of heat decomposition, it is preferable that in the dye used in the optical recording medium, A and B, or C and D, are bound to each other to form a ring, and examples of such a ring include the following rings. In the exemplary rings, Ra, Rb and Rc each independently represent a hydrogen atom or a substituent.

A-1

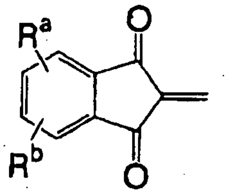

A-2

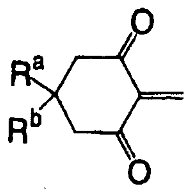

A-3

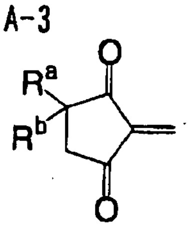

A-4

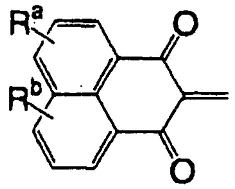

A-5

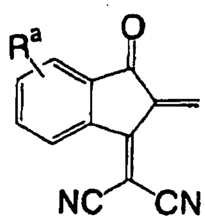

A-6

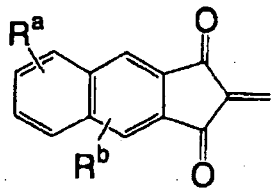

A-7

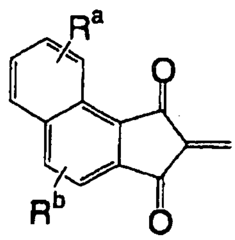

A-8

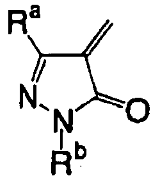

A-9

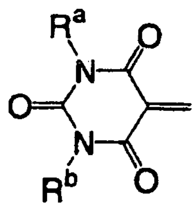

A-10

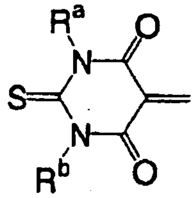

A-11

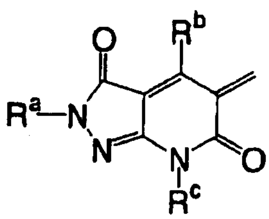

A-12

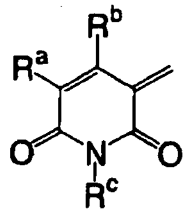

A-13

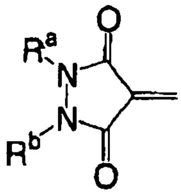

A-14

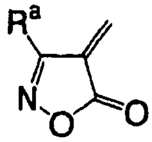

A-15

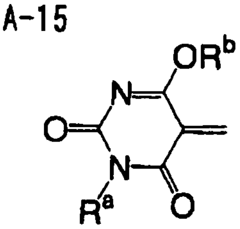

A-16

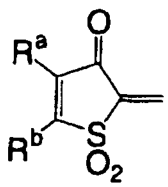

A-17

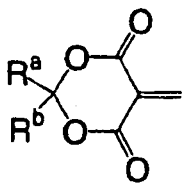

A-18

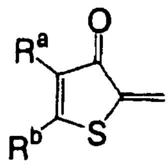

A-19

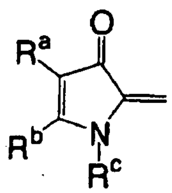

A-20

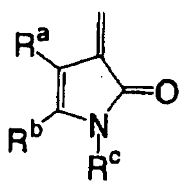

A-21

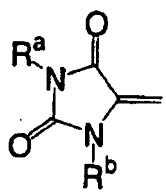

A-22

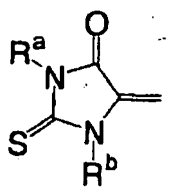

A-23

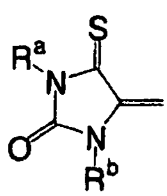

A-24

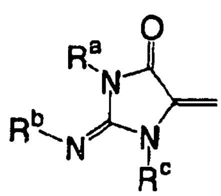

A-25

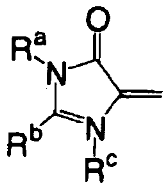

A-26

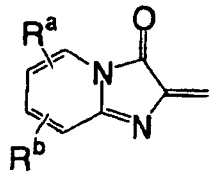

A-27

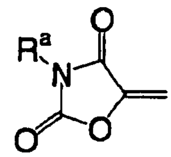

A-28

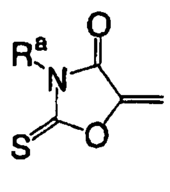

A-29

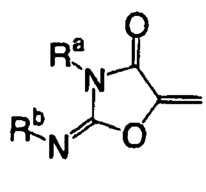

A-30

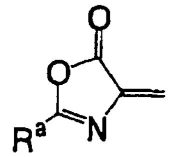

A-31

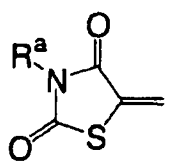

A-32

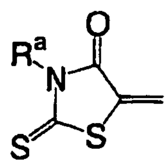

A-33

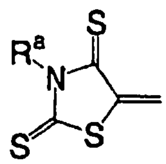

A-34

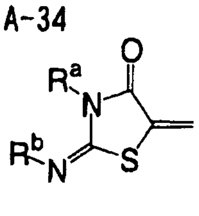

A-35

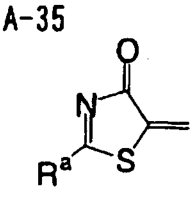

A-36

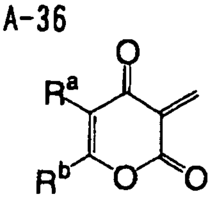

A-37

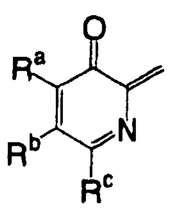

A-38

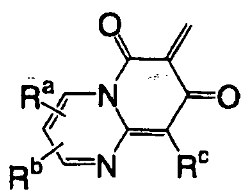

A-39

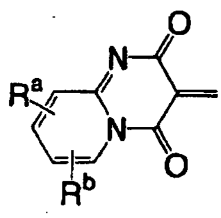

A-40

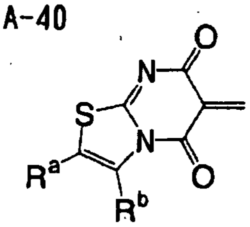

A-41

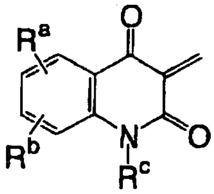

A-42

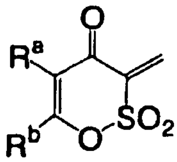

A-43

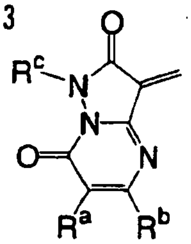

A-44

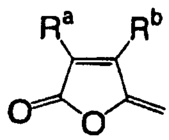

A-45

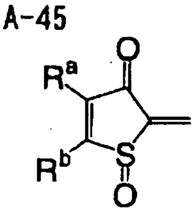

A-46

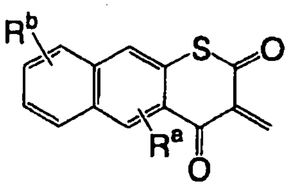

A-47

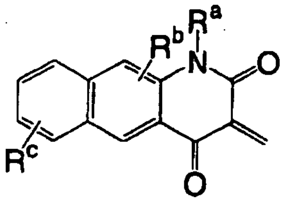

A-48

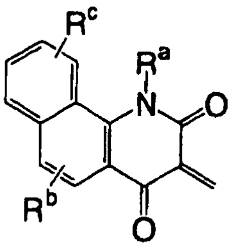

A-49

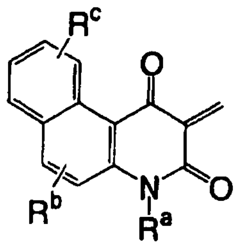

A-50

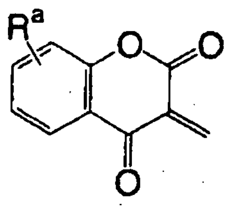

A-51

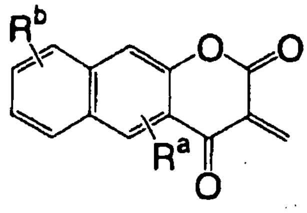

A-52

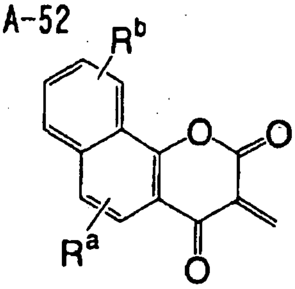

A-53

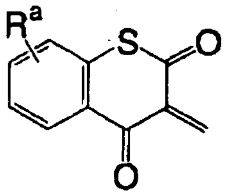

A-54

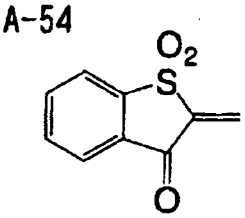

A-55

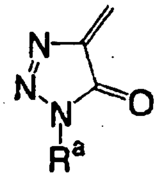

A-56

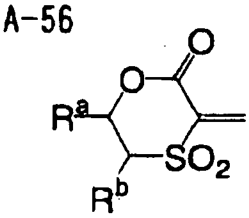

A-57

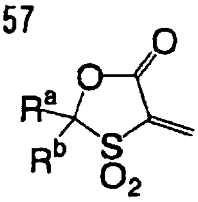

A-58

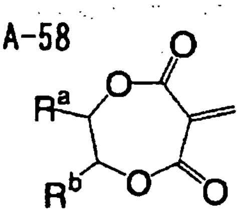

A-59

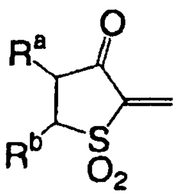

A-60

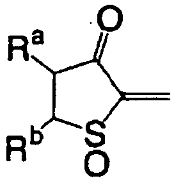

A-61

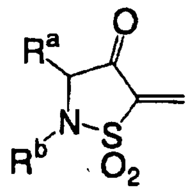

A-62

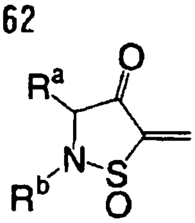

A-63

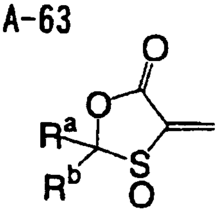

A-64

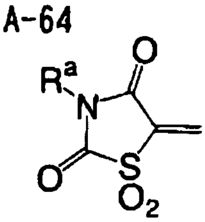

Preferable rings among those shown above are rings shown by A-8, A-9, A-10, A-11, A-12, A-13, A-14, A-16, A-17, A-36, A-39, A-41, A-54 and A-57. More preferable rings are those shown by A-8, A-9, A-10, A-13, A-14, A-16, A-17 and A-57. The most preferable rings are those shown by A-9, A-10, A-13, A-17 and A-57.

The substituents represented by Ra, Rb and Rc have the same definitions as the definition of the substituent represented by R. Ra, Rb and Rc may be bound to each other to form a carbon ring or a heterocyclic ring. Examples of

the carbon ring can include, for example, a saturated or unsaturated 4- to 7-memberred carbon ring such as a cyclohexyl ring, cyclopentyl ring, cyclohexene ring and benzene ring. Examples of the heterocyclic ring can include, for example, a saturated or unsaturated 4- to 7-memberred heterocycle such as a piperidine ring, piperazine ring, morpholine ring, tetrahydrofuran ring, furan ring, thiophene ring, pyridine ring, and pyrazine ring. These carbon rings or heterocyclic rings may be further substituted. Examples of the groups that can be substituted on the carbon rings or heterocyclic rings include the substituents mentioned above as examples of the substituent represented by R.

In the formula (I), m is an integer of 0 to 3, and the absorption wavelength of the oxonol dye varies largely depending on the value of m. A dye having the optimum absorption wavelength should be designed depending on the oscillation wavelength of a laser used in recording/reproduction, and in this respect, selection of the value of m is important. When the central oscillation wavelength of a laser used in recording/reproduction is 780 nm (semiconductor laser for CD-R recording), m in the formula (I) is preferably 2 or 3; when the central oscillation wavelength is 635 nm or 650 nm (semiconductor laser for DVD-R recording), m is preferably 1 or 2; and when the central oscillation wavelength is 550 nm or less (for example, a bluish-purple semiconductor laser having a central oscillation wavelength of 405 nm), m is preferably 0 or 1.

In the formula (I), the t-valent cation represented by $Y^{t+}$ may be an inorganic or organic cation, and examples the inorganic cation can include, for example, a hydrogen ion, a metal ion, an ammonium ion ($NH_4^+$), preferably a metal ion, more preferably an alkali metal ion (for example, $Li^+$, $Na^+$, $K^+$) or a transition metal ion (for example, $Cu^{2+}$, $Co^{2+}$). When the inorganic cation is a metal transition ion, the ion may be coordinated with one or more organic ligands.

The t-valent organic cation represented by $Y^{t+}$ is preferably an onium ion, particularly preferably an ion represented by formula (III) below. These compounds can be obtained easily by Menschutkin reaction of their corresponding dipyridyl with a halide having a desired substituent (see, for example, JP-A No. 61-148162) or by arylation reaction according to the methods described in JP-A No. 51-16675 and JP-A No. 1-96171.

Formula (III)

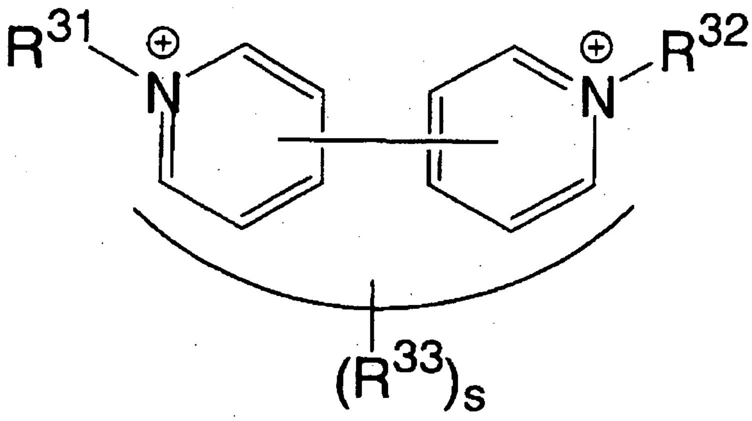

wherein, in the formula, $R^{31}$ and $R^{32}$ each independently represent an alkyl group, an alkenyl group, an alkynyl group, an aryl group or a heterocyclic group, $R^{33}$ represents a substituent, s represents an integer of 0 to 8, and when s is an integer of 2 or greater, a plurality of $R^{33}$s may be the same or different or may be bound to one another to form a ring.

In the formula (III), the alkyl group represented by $R^{31}$ or $R^{32}$ is preferably a C 1 to C18 group, more preferably a C1 to C8 group, may be chain, branched or cyclic, and examples thereof can include, for example, methyl, ethyl, n-propyl, isopropyl, n-butyl, isobutyl, s-butyl, isoamyl, n-hexyl, cyclohexyl, 2-ethylhexyl, and n-octyl.

In the formula (III), the alkenyl group represented by $R^{31}$ or $R^{32}$ is preferably a C2 to C18 group, more preferably a C2 to C8 group, and examples thereof can include, for example, vinyl, 2-propenyl, 2-methylpropenyl and 1,3-butadienyl.

In the formula (III), the alkynyl group represented by $R^{31}$ or $R^{32}$ is preferably a C2 to C18 group, more preferably a C2 to C8 group, and examples thereof can include, for example, ethynyl, propynyl and 3,3-dimethylbutynyl.

In the formula (III), the aryl group represented by $R^{31}$ or $R^{32}$ is preferably a C6 to C18 group, more preferably a C6 to C10 group, and examples thereof can include, for example, phenyl, 1-naphthyl and 2-naphthyl.

In the formula (III), the heterocyclic group represented by $R^{31}$ and $R^{32}$ is preferably a C4 to C7 saturated or unsaturated heterocyclic group, and each hetero atom contained therein is preferably a nitrogen atom, an oxygen atom or a sulfur atom, and examples of the heterocyclic group can include, for example, 4-pyridyl, 2-pyridyl, 2-pyrazyl, 2-pyrimidyl, 4-pyrimidyl, 2-imidazolyl, 2-furyl, 2-thiophenyl, 2-bezoxazolyl, and 2-benzothioxazolyl.

In the formula (III), $R^{31}$ and $R^{32}$ may further have a substituent, and examples of the substituent can include the substituents mentioned above as examples of the substituent represented by R in the formula (I).

The substituent represented by $R^{33}$ in the formula (III) has the same definition as that of R in the formula (II), preferably a C 1 to C18 alkyl group, more preferably a C1 to C8 unsubstituted alkyl group.

In the formula (III), s is an integer of 0 to 8, preferably 0 to 4, more preferably 0 to 2, still more preferably 0. When s is an integer of 2 or more, a plurality of $R^{33}$s may be the same or different and may be bound to one another to form a ring. The two pyridine rings in the formula (III) may be bound to each other at any position, but are preferably bound at the 2 or 4 position of the pyridine ring and more preferably bound between the positions 4 of the two pyridine rings.

The oxonol dyes represented by the formula (I) may be bound at arbitrary positions to form a multimer, and the respective units in this case may be the same or different and may be bound to a polymer chain such as polystyrene, polymethacrylate, polyvinyl alcohol, cellulose etc.

Specific examples of the oxonol dyes represented by the formula (I) can include the specific examples of oxonol dyes described in JP-A No. 63-209995, JP-A No. 10-297103, JP-A No. 11-78106, JP-A No. 11-348420, JP-A No. 2000-52658, Japanese Patent Application No. 11-78106. Some of the compounds illustrated therein are as follows:

(II-1)

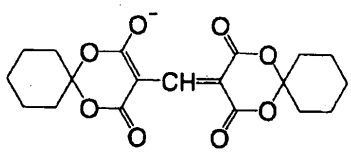

1/2

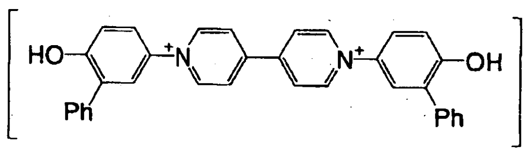

(II-2)

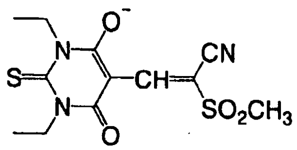

1/2

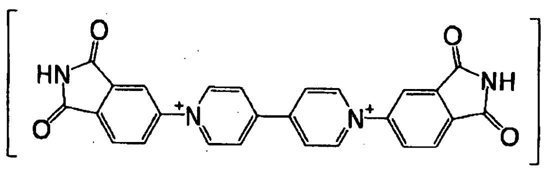

(II-3)

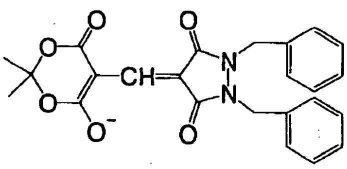

1/2

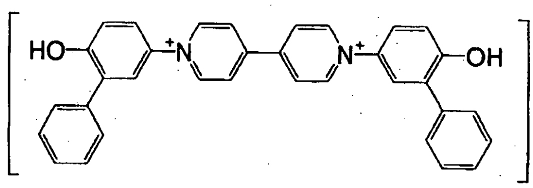

(II-4)

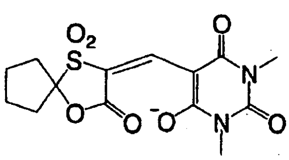

1/2

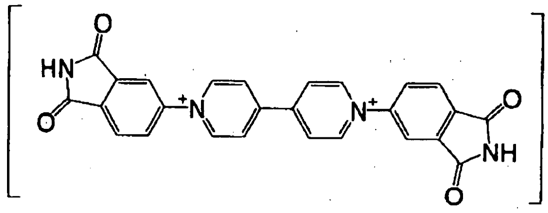

(II-5)

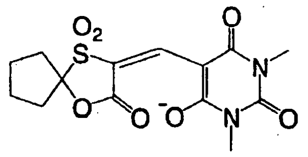

1/2

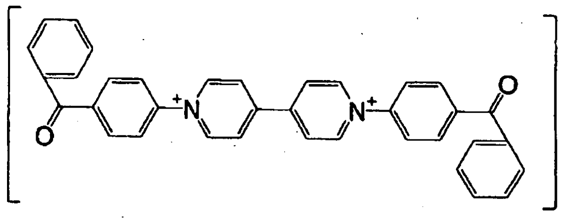

(II-6)

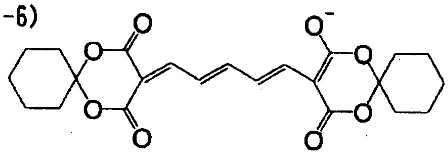

1/2

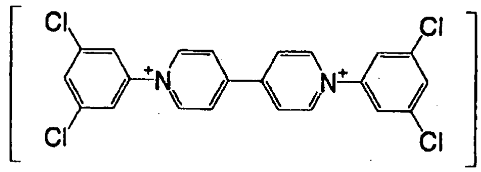

(II-7)

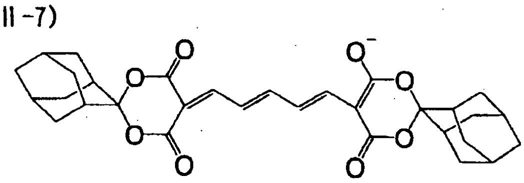

1/2

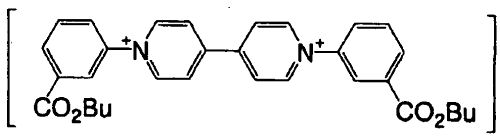

(II-8)

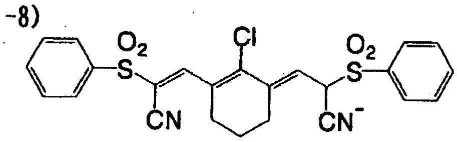

1/2

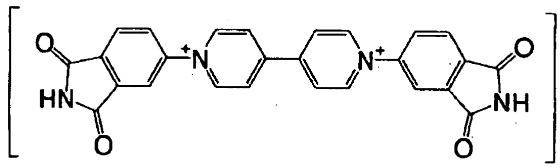

(II-9)

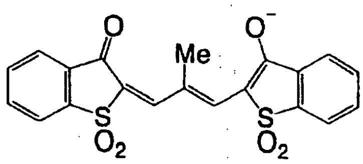

1/2

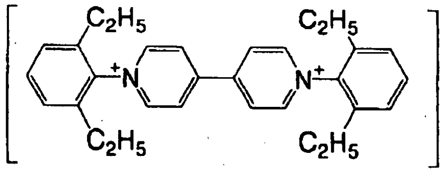

(II-10)

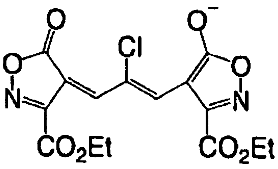

1/2

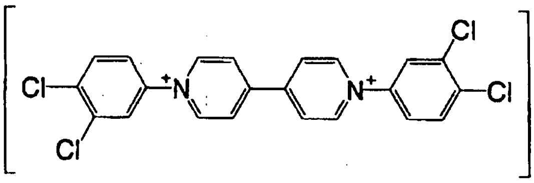

(II-11)

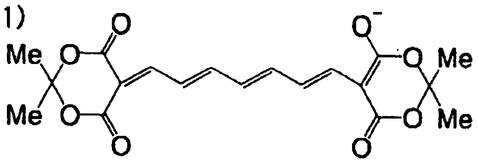

1/2

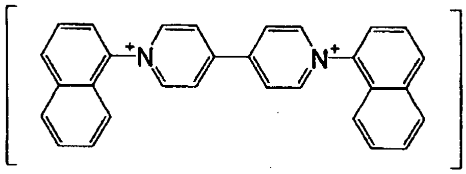

(II-12)

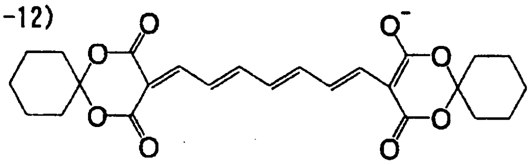

1/2

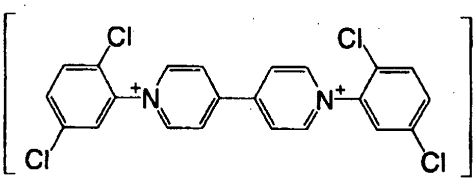

(II-13)

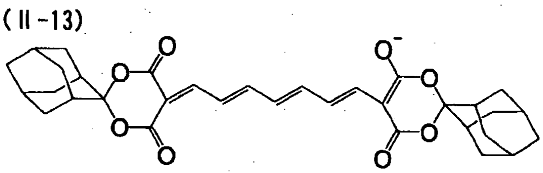

1/2

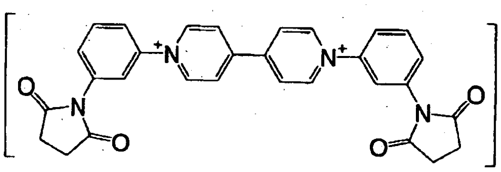

(II-14)

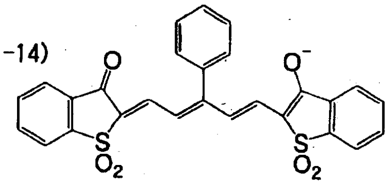

1/2

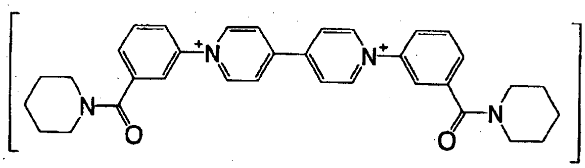

(II-15)

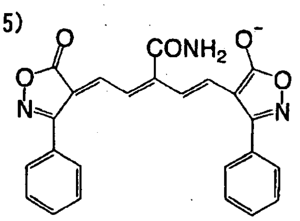

1/2

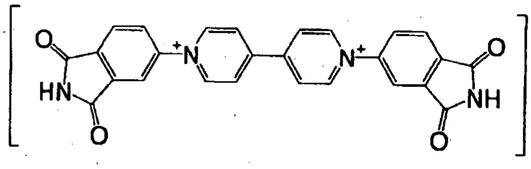

The recording layer preferably contain various anti-fading agents to improve the light resistance of the recording layer. The anti-fading agent can be exemplified by an organic oxidant or a singlet oxygen quencher. The organic antioxidant used as an anti-fading agent is preferably a compound described in JP-A No. 10-151861. As the singlet oxygen quencher, those described in publications such as known patent specifications can be utilized. Examples of such singlet

oxygen quenchers include those described in JP-A No. 58-175693, JP-A No. 59-81194, JP-A No. 60-18387, JP-A No. 60-19586, JP-A No. 60-19587, JP-A No: 60-35054, JP-A No. 60-36190, JP-A No. 60-36191, JP-A No. 60-44554, JP-A No. 60-44555, JP-A No. 60-44389, JP-A No. 60-44390, JP-A No. 60-54892, JP-A No. 60-47069, JP-A No. 63-209995, JP-A No. 4-25492, Japanese Patent Application Publication (JP-B) No. 1-38680, JP-B No. 6-26028 and German Patent No. 350399, and on page 1141 in the Journal of Japanese Chemical Society, October, 1992.

Preferable examples of singlet oxygen quenchers include compounds represented by the following formula (IV):

Formula (IV)

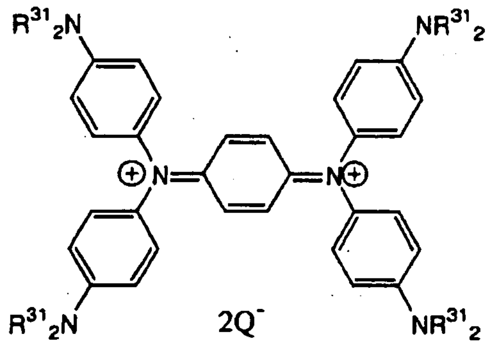

$R^{31}$ represents an alkyl group which may have a substituent, and $Q^-$ represents an anion.

In the formula, $R^{31}$ represents an alkyl group which may have a substituent, and $Q^-$ represents an anion.

In the formula (IV), $R^{31}$ is generally an optionally substituted C1 to C8 alkyl group and is preferably an unsubstituted C1 to C6 alkyl group. Examples of the substituent on the alkyl group can include, for example, a halogen atom (for example, F, Cl), an alkoxy group (for example, methoxy, ethoxy), an alkylthio group (for example, methylthio, ethylthio), an acyl group (for example, acetyl, propionyl), an acyloxy group (for example, acetoxy, propionyloxy), a hydroxy group, an alkoxycarbonyl group (for example, methoxycarbonyl, ethoxycarbonyl), an alkenyl group (for example, vinyl) and an aryl group (for example, phenyl, naphthyl). Among these substituents, a halogen atom, an alkoxy group, an alkylthio group and an alkoxycarbonyl group are preferable. Preferable examples of the anion Q-include $ClO^{4-}$, $AsF^{6-}$, $BF^{4-}$ and $SbF^{6-}$.

The amount of the anti-fading agent such as a singlet oxygen quencher is usually in the range of 0.1 to 50 mass%, preferably 0.5 to 45 mass%, more preferably in the range of 3 to 40 mass%, still more preferably in the range of 5 to 25 mass%, based on the amount of a compound for recording.

The recording layer is formed by dissolving a recording material such as the above dye (organic matter etc.) etc., together with a binder etc., in a suitable solvent to prepare a recording layer coating solution, then applying this recording layer coating solution onto a reflective layer formed on the surface of a substrate to form a coating film thereon and drying the coating film. The concentration of the recording material in the recording layer coating solution is generally in the range of 0.01 to 15 mass%, preferably in the range of 0.1 to 10 mass%, more preferably in the range of 0.5 to 5 mass%, most preferably in the range of 0.5 to 3 mass%. As the method of dissolving the recording material etc., a method such as sonication, a homogenizer, heating, etc. can be mentioned.

Examples of the solvent for preparing the recording layer coating solution include esters such as butyl acetate, methyl lactate, ethyl lactate, and Cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol and n-butanol diacetone alcohol; fluorine-based solvents such as 2,2,3,3-tetrafluoropropanol; and glycol ethers such as ethylene glycol monomethyl ether, ethylene glycol monoethyl ether and propylene glycol monomethyl ether.

In consideration of the solubility of the recording material used, the solvents can be used alone or as a mixed solvent thereof. The coating solution can further contain various additives such as an antioxidant, an UV absorber, a plasticizer and a lubricant, depending on the object.

When a binder is used, examples of the binder include, for example, naturally occurring organic polymers such as gelatin, cellulose derivatives, dextran, rosin and rubber, and synthetic organic polymers including initial condensates of hydrocarbon resins such as polyethylene, polypropylene, polystyrene and polyisobutylene, vinyl resins such as polyvinyl chloride, polyvinylidene chloride and a polyvinyl chloride-polyvinyl acetate copolymer, acrylic resins such as poly(methyl acrylate) and poly(methyl methacrylate), and thermosetting resins such as polyvinyl alcohol, chlorinated polyethylene, epoxy resin, butyral resin, rubber derivatives, and phenol/formaldehyde resin. When the binder is simultaneously used as a material in the recording layer, the ratio of the binder to the recording material is usually in the range of 0.01 1 to 50 by mass, preferably 0.1 to 5 by mass. The concentration of the recording material in the coating solution thus prepared is generally in the range of 0.01 to 10 mass%, more preferably 0.1 to 5 mass%.

Examples of the coating method can include, for example, a spraying method, a spin coating method, a dipping method, a roll coating method, a blade coating method, a doctor roll method, a screen printing method etc. The recording layer may be a single layer or a double layer. The thickness of the recording layer is generally in the range of 20 to 500 nm, preferably in the range of 30 to 300 nm, more preferably in the range of 50 to 100 nm. The coating temperature is not particularly problematic if it is in the range of 23 to 50°C, and is preferably 24 to 40°C, more preferably 25 to 37°C.

For regulation of viscosity, the coating temperature is preferably in the range of 23 to 50°C, more preferably in the range of 24°C to 40°C, still more preferably in the range of 25 to 37°C. For preventing a disk from warping, the irradiation of the coating film with ultraviolet rays is carried out preferably by using a pulse-type light irradiator (preferably an UV irradiator). The pulse interval is preferably in the order of msec or less, more preferably μsec or less. The amount of irradiating light per pulse is not particularly limited, and is preferably 3 kW/$cm^2$ or less, more preferably 2 kW/$cm^2$ or less. The number of irradiation is not particularly limited, and is preferably 20 times or less, more preferably 10 times or less.

As the recording layer, a phase-change recording layer can also be used. The phase-change recording layer is a layer containing a material capable of repeating phase change between crystalline and noncrystalline phases upon irradiation with laser light.

The phase change between crystalline and noncrystalline phases is caused for example by the following method. That is, when information is recorded, the phase-change recording layer is partially melted by irradiation with an intensive laser light pulse for a short time. The melted portion is cooled rapidly by thermal diffusion and solidified to form a record mark in a noncrystalline state. When information is erased, the record mark portion is irradiated with laser light and thereby heated to a temperature between the crystallization temperature to melting point of the recording layer and gradually cooled, thereby crystallizing the record mark in a noncrystalline state to return the recording layer to the original unrecorded state.

Specific examples of the material constituting the phase-change recording layer include an Sb-Te alloy, a Ge-Sb-Te alloy, a Pd-Ge-Sb-Te alloy, an Nb-Ge-Sb-Te alloy, a Pd-Nb-Ge-Sb-Te alloy, a Pt-Ge-Sb-Te alloy, a Co-Ge-Sb-Te alloy, an In-Sb-Te alloy, an Ag-In-Sb-Te alloy, an Ag-V-In-Sb-Te alloy, an Ag-Ge-In-Sb-Te alloy, etc. In particular, a Ge-Sb-Te alloy and an Ag-In-Sb-Te alloy are preferable for enabling rewriting many times.

The thickness of the phase-change recording layer is preferably from 10 to 50 nm, more preferably from 15 to 30 nm.

The phase-change recording layer can be formed by a gaseous phase thin-film deposition method such as a sputtering method, a vacuum deposition method etc.

In other embodiments (mainly applicable embodiments include, but are not limited to, the embodiments B to E), the recording layer is a dye-type recording layer containing an organic dye formed on a reflective layer and is capable of recording information with laser light having wavelength of 500 nm or less.

Examples of the organic dye include a cyanine dye, an oxonol dye, a metal complex dye, an azo dye, a phthalocyanine dye, etc.

Further, dyes described in JP-A No. 4-74690, JP-A No. 8-127174, JP-A No. 11-53758, JP-A No. 11-334204, JP-A No. 11-334205, JP-A No. 11-334206, JP-A No. 11-334207, JP-A No. 2000-43423, JP-A No. 2000-108513 and JP-A No. 2000-158818 are also preferably used as the organic dye.

Organic compounds such as a triazole compound, a triazine compound, a cyanine compound, a merocyanine compound, an aminobutadiene compound, a phthalocyanine compound, a cinnamic acid compound, a viologen compound, an azo compound, an oxonol benzoxazole compound, a benzotriazole compound etc. can also be preferably used as the recording layer material. Among these compounds, a cyanine compound, an oxynol dye, an aminobutadiene compound, a benzotriazole compound and a phthalocyanine compound are preferable, among which an oxonol dye is particularly preferable. These may be selected from the dyes mentioned above as dyes usable in the previously described embodiments.

The recording layer is formed by dissolving a recording material that is an organic dye, together with a binder etc., in a suitable solvent to prepare a coating solution, then applying this coating solution onto a reflective layer formed on the surface of a substrate to form a coating film thereon and drying the coating film. The concentration of the recording material in the coating solution is generally in the range of 0.01 to 15 mass%, preferably in the range of 0.1 to 10 mass%, more preferably in the range of 0.5 to 5 mass%, most preferably in the range of 0.5 to 3 mass%.

Examples of the solvent in the coating solution include esters such as butyl acetate, ethyl lactate and Cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol and n-butanol diacetone alcohol; fluorine-based solvents such as 2,2,3,3-tetrafluoropropanol; and glycol

ethers such as ethylene glycol monomethyl ether, ethylene glycol monoethyl ether and propylene glycol monomethyl ether.
In consideration of the solubility of the recording material used, the solvents can be used alone or as a mixed solvent thereof. The coating solution can further contain various additives such as an antioxidant, an UV absorber, a plasticizer and a lubricant, depending on the object.
When a binder is used, examples of the binder include, for example, naturally occurring organic polymers such as gelatin, cellulose derivatives, dextran, rosin and rubber, and synthetic organic polymers including initial condensates of hydrocarbon resins such as polyethylene, polypropylene, polystyrene and polyisobutylene, vinyl resins such as polyvinyl chloride, polyvinylidene chloride and a polyvinyl chloride-polyvinyl acetate copolymer, acrylic resins such as poly (methyl acrylate) and poly(methyl methacrylate), and thermosetting resins such as polyvinyl alcohol, chlorinated polyethylene, epoxy resin, butyral resin, rubber derivatives, and phenol-formaldehyde resin. When the binder is simultaneously used as a material in the recording layer, the ratio of the binder to the recording material is usually in the range of 4.01 to 50 by mass, preferably 0.1 to 5 by mass. The concentration of the recording material in the coating solution thus prepared is generally in the range of 0.01 to 10 mass%, more preferably 0.1 to 5 mass%.
Examples of the coating method can include, for example, a spraying method, a spin coating method, a dipping method, a roll coating method, a blade coating method, a doctor roll method, a screen printing method etc. The recording layer may be a single layer or a double layer. The thickness of the recording layer is generally in the range of 20 to 500 nm, preferably in the range of 30 to 300 nm, more preferably in the range of 50 to 100 nm.
The recording layer can contain various anti-fading agents to improve the light resistance of the recording layer. As the anti-fading agent, a singlet oxygen quencher is generally used. As the singlet oxygen quencher, those described in publications such as known patent specifications can be utilized.
Examples of such singlet oxygen quenchers include those described in JP-A No. 58-175693, JP-A No. 59-81194, JP-A No. 60-18387, JP-A No. 60-19586, JP-A No. 60-19587, JP-A No. 60-35054, JP-A No. 60-36190, JP-A No. 60-36191, JP-A No. 60-44554, JP-A No. 60-44555, JP-A No. 60-44389, JP-A No. 60-44390, JP-A No. 60-54892, JP-A No. 60-47069, JP-ANo. 63-209995, JP-ANo. 4-25492, JP-B No. 1-38680, JP-B No. 6-26028 and German Patent No. 350399, and on page 1141 in the Journal of Japanese Chemical Society, October, 1992.
The amount of the anti-fading agent such as singlet oxygen quencher is usually in the range of 0.1 to 50 mass%, preferably 0.5 to 45 mass%, more preferably 3 to 40 mass%, still more preferably 5 to 25 mass%, based on the amount of the organic dye.

<Intermediate layer>

In certain embodiments (mainly applicable embodiments include, but are not limited to, the embodiment A), the intermediate layer is formed at least between the recording layer and an adhesive layer described later. When the adhesive layer is formed on the recording layer, an adhesive in the adhesive layer dissolves organic matter in the recording layer, so the intermediate layer is provided to prevent the adhesive from contacting directly with the recording layer, thus preventing the adhesive from dissolving the recording layer.
As described above, the thickness $t_1$ of the intermediate layer after a high-temperature high-humidity storage test satisfies the relationship: $0.9 \leq t_1 \leq 1.1t$ wherein t is the thickness of the intermediate layer before the high-temperature high-humidity storage test. To satisfy this relationship, the constituent component, oxidation degree, nitridation degree, film density and thickness of the intermediate layer, the type of the target, and film-making conditions should be selected.
As the constituent component of the intermediate layer, a metal oxide is preferably used, and the metal oxide is preferably a Ta oxide or an Nb oxide. In the intermediate layer containing a Ta- or Nb-containing compound, the compound is for example a Ta or Nb oxide or nitride, preferably a Ta or Nb oxide. The oxide is preferably $Ta_2O_5$, $Nb_2O_x$, NbO or TaO.
In sputtering by introducing a usual rare gas (for example, an argon gas) only, which is carried out in forming the intermediate layer, oxygen in metal oxide scattered upon sputtering is discharged together with the rare gas, so the number of oxygen atoms in the film formed is reduced, resulting in an oxygen deficiency. This oxygen deficiency appears as stained spots to influence the optical characteristics of the intermediate layer. Therefore, for compensating for oxygen discharged together with a rare gas in the invention, the introduced gas is previously mixed with oxygen. That is, by using a mixed gas of a rare gas mixed with oxygen as the introduced gas, oxygen derived from the metal oxide target and oxygen derived from the mixed gas are present in the formed film, and by suitably regulating the amount of oxygen in the introduced gas, the film can be formed at the metal/oxygen ratio of the target metal oxide, or a film having a desired metal/oxygen ratio can be formed by regulating the metal/oxygen ratio in the target metal oxide and the ratio of oxygen in the mixed gas.
The intermediate layer can be formed for example by sputtering with a Ta- or Nb-containing compound as the target. The pressure in forming the intermediate layer is preferably from $1\times10^{-2}$ to $1\times10^{-5}$ torr (1.33 Pa to $1.33\times10^{-3}$ Pa), and the rate (sputtering rate) is preferably from 0.1 to 10 nm/sec. The sputtering power is preferably from 0.2 to 4

kW, more preferably from 0.4 to 3 kW, still more preferably from 0.5 to 2.5 kW.

In the invention, a rare gas such as Ar, and oxygen gas, are used as the gas in sputtering as described above. The flow rate of each of the rare gas or the oxygen gas is preferably from 1 to 50 sccm (1 to 50 ml/min). When the target is a metal oxide, the flow rate of oxygen gas is preferably from 0.1 to 25 sccm, more preferably from 0.2 to 20 sccm, still more preferably from 0.5 to 15 sccm. By regulating the flow rate of oxygen gas in the range of 0.1 to 25 sccm, a stable film can be obtained at a satisfactory film-making rate.

The rare gas and oxygen gas may be previously mixed and introduced as a mixed gas or may be introduced separately at the time of sputtering.

In the case of RF sputtering, its tuning (matching) is regulated, and REF relative to FWD is preferably 10% or less, more preferably 5% or less, still more preferably 2.5% or less.

In the case of DC sputtering, it is preferable to simultaneously use a technique of eliminating the electrification of the target instantly by pulse sputtering or with a chopper or the like.

In the invention, the thickness of the intermediate layer is preferably from 1 to 80 nm. By regulating the thickness of the intermediate layer in this range, there can be brought about excellent recording/reproducing characteristics with a sufficient separation between the organic dye in the recording layer and the adhesive layer. The thickness of the intermediate layer is more preferably from 1 to 50 nm, still more preferably from 1.5 to 20 nm.

In other embodiments (mainly applicable embodiments include, but are not limited to, the embodiments B to E), the intermediate layer is formed on the recording layer from the above-described material by the above-described method. The intermediate layer is formed between the recording layer and the cover layer, and may additionally be provided at least one of "between the substrate and the reflective layer" and "between the reflective layer and the recording layer".

<Cover layer>

In certain embodiments (mainly applicable embodiments include, but are not limited to, the embodiment A), the cover layer is a layer consisting of an adhesive layer and a cover sheet, which is formed for preventing penetration of water into the interior of the optical recording medium. Preferably, the cover layer is formed by attaching a cover sheet of 0.05 to 0.09 mm in thickness via an UV-curable adhesive having a viscosity of 130 to 590 mPas·s at 25°C before curing. Although the material of the cover sheet is not particularly limited insofar as it is a transparent material, the material is preferably polycarbonate, cellulose triacetate or the like, more preferably a material having a moisture absorption of 5% or less at 23°C under 50% RH. The thickness of the cover sheet is preferably from 0.07 to 0.09 mm, more preferably from 0.08 to 0.09 mm. When the thickness of the cover sheet is less than 0.05 mm, the thickness of the adhesive layer is increased to make uniform coating difficult, thus failing to satisfy the specification of thickness unevenness of $\pm 3$ μm. When the thickness is greater than 0.09 mm, on the other hand, the specification (0.1 mm) of the thickness of the cover layer is difficult to satisfy.

The term "transparent" refers to such transparency as to transmit recording light and reproducing light (transmittance: 90% or more).

The water permeability coefficient of the cover layer consisting of an adhesive layer and a cover sheet is preferably 100 g/($m^2$·d) or less, more preferably 80 g/($m^2$·d) or less. When the water permeability coefficient is 100 g/($m^2$·d) or less, the penetration of water into the interior of the optical recording medium can be effectively prevented.

The water permeability coefficient can be determined in the manner described below. That is, the water permeability coefficient is preferably measured for a measurement film area of 5 $cm^2$ with a measuring machine PERMATRAN W3/31 (manufactured by MOCON) at a temperature of 40°C under 90% relative humidity (upper cell 10%, lower cell 100%) by a method according to JIS K7129B.

Then, a test specimen prepared as described below is attached to a transmission cell. The test specimen is structured such that it can be inserted into between the two measurement cells (upper and lower measurement cells), wherein the lower cell maintains an atmosphere with high relative humidity. The upper cell is structured such that water vapor having passed through the test specimen is accumulated therein, and the amount of the water that has passed through the test specimen is measured with an infrared humidity sensor in the upper cell.

Preferably, the above-mentioned test specimen is prepared by any of two methods (Methods 1 and 2) shown below. The method can be selected from the two methods, depending on the bonding method, the place where the intermediate layer is provided, etc.

Method 1 (measurement method of measuring the test specimen after detachment from the disk (optical recording medium)

An upper part (the part from the intermediate layer to the cover layer) above the recording layer of the prepared optical recording medium is peeled off. The peeled film (cover layer) is cut off so as to fit in the opening, and a part thereof is masked with aluminum such that its transmission area becomes 5 $cm^2$, and the film is used as a test specimen.

Method 2 (method of measuring the test specimen before attachment to a substrate)

Before attachment to a substrate, the cover layer (cover sheet) is cut off so as to fit in the opening of the cell. A part thereof is masked with aluminum such that its transmission area becomes 5 $cm^2$, and the film is used as a test specimen. During the preparation, the intermediate layer to be provided on the recording layer is usually formed on the cover film under the same conditions to form a film-shaped cover layer.

The cover layer is formed by applying the vacuum-degassed UV-curable adhesive at a predetermined temperature onto the intermediate layer to form a coating film, then attaching a cover sheet to the coating film, and irradiating light from above the cover sheet to cure the coating film. The thickness of the cover layer thus formed is preferably in the range of 0.01 to 0.2 mm, more preferably in the range of 0.03 to 0.1 mm, still more preferably in the range of 0.05 to 0.095 mm.

The UV-curable adhesive used is preferably an adhesive having a viscosity of 130 to 590 mPa·s at 25°C before curing. The viscosity of the UV-curable adhesive is more preferably from 140 to 500 mPa·s, still more preferably from 150 to 400 mPa·s. When the viscosity is lower than 130 mPa·s, bubbles in the UV-curable adhesive may not be removed even by degassing, while when the viscosity is higher than 590 mPa·s, the thickness may be uneven. The cure shrinkage of the UV-curable adhesive is preferably 9% or less.

Preferably, the UV-curable adhesive is poured out onto a region within 30 mm or less from the inner periphery of the optical recording medium and applied by spin coating. In spin coating, the optical recording medium is rotated for example at a varying rate of from 30 to 8000 rpm, while the UV-curable adhesive is spread uniformly on the whole area. By applying the UV-curable adhesive in this manner, the thickness of the cover layer can be made less uneven.

The UV-curable adhesive preferably has small cure shrinkage in order to prevent the disk from warping. Examples of such a UV-curable adhesive can include, for example, UV-curable adhesives such as SD-640 and SD-347 manufactured by Dainippon Ink and Chemicals, Incorporated.

To use the UV-curable adhesive, a photopolymerization initiator should be added to the following compound. As the photopolymerization initiator, an aromatic ketone is used. Although the aromatic ketone is not particularly limited, the aromatic ketone is preferably a ketone having a relatively high absorbancy index at wavelengths of 254, 313 and 865 mm corresponding to a bright-line spectrum of a mercury lamp usually used as an UV light source. Typical examples thereof include acetophenone, benzophenone, benzoin ethyl ether, benzyl methyl ketal, benzyl ethyl ketal, benzoin isobutyl ketone, hydroxy dimethyl phenyl ketone, 1-hydroxy cyclohexyl phenyl ketone, 2,2-diethoxyacetophenone, and Michler's ketone, and various aromatic ketones can be used. The mixing ratio of the aromatic ketone is preferably from 0.5 to 20 mass parts, preferably from 2 to 15 mass parts, more preferably from 3 to 10 mass parts, based on 100 parts by mass of the compound (a). As the UV-curable adhesive, a commercial adhesive previously mixed with a photopolymerization initiator may be used. A mercury lamp is used as the UV light source. A 20 to 200 W/cm mercury lamp is used at a rate of 0.3 m/min to 20 m/min. Preferably the distance between the base body and the mercury lamp is generally 1 to 30 cm.

When a pressure-sensitive adhesive is provided on the attachment surface of the cover sheet, a layer consisting of the pressure-sensitive adhesive serves as the adhesive layer after attachment.

In the optical recording medium in this embodiment, a dielectric layer or a light transmission layer can be formed between the reflective layer and the recording layer, depending on the characteristics of the recording layer. For example, a light transmission layer may be provided to improve adhesiveness to the recording layer, and when a phase-change recording layer is provided, a dielectric layer for heat release may be provided. The dielectric layer preferably uses materials containing nitrides, oxides, carbides and sulfides such as those of Zn, Si, Ti, Te, Sn, Mo and Ge and may consist of materials such as $ZnS\text{-}SiO_2$. The light transmission layer can use any materials having 90% or more transmittance at the laser wavelength.

The dielectric layer or the light transmission layer can be formed by methods known in the art. The thickness of the dielectric layer is preferably from 1 to 100 nm, and the thickness of the light transmission layer is preferably from 2 to 50 nm.

A hard coat layer may be provided on the transparent sheet. The hard coat layer is a layer for preventing occurrence of flaws, and its material is preferably a radiation-curable resin. The radiation-curable resin used in the hard coat layer may be any resin capable of hardening upon irradiation with radiations, and specifically a resin having 2 or more radiation-functional double bonds in its molecule is preferable.

Example of such resin include acrylates, acrylamides, methacrylates, methacrylic acid amides, allyl compounds, vinyl ethers, vinyl esters etc. Particularly preferable examples are bifunctional or higher-functional acrylate compounds and methacrylate compounds.

In other embodiments (mainly applicable embodiments include, but are not limited to, the embodiments B to E), the cover layer is formed for protecting the inside of the optical recording medium against pollution, flaw and impact shock or for preventing penetration of water. Although the material is not particularly limited insofar as it is a transparent material, a cover sheet containing polycarbonate, cellulose triacetate or the like and having a pressure-sensitive adhesive on at

least one side can be cited as a preferable example.
The term "transparent" refers to such transparency as to transmit recording light and reproducing light (transmittance: 90% or more).

A hard coat layer for preventing the cover sheet from being scratched may be formed on the other side of the cover sheet than the side onto which a pressure-sensitive adhesive was applied. Formation of the cover sheet on the recording layer is carried out preferably in the following manner.
First, one side of a cover sheet wound in the form of a roll is coated continuously with a radiation-curable resin coating solution. The coating film formed by coating is cured by continuous irradiation with radiations, to form a hard coat layer on the cover sheet. Thereafter, an adhesive layer consisting of a pressure-sensitive adhesive is provided continuously on the other side of the cover sheet, and the cover sheet thus provided with the hard coat layer and the adhesive layer is punched out in a predetermined shape (disk-shaped). The disk-shaped cover sheet is provided on a recording layer with the adhesive layer of the cover sheet serving as the attachment face, thus forming a cover layer. The methods such as the method of attaching the cover sheet are merely illustrative and various methods can be used.

The thickness of the cover sheet is preferably in the range of 0.03 to 0.15 mm, more preferably 0.05 to 0.12 mm. By regulating the thickness in this range, there are advantages such as easy handling and suppression of coma aberration:

As the pressure-sensitive adhesive, it is possible to use acrylate-, rubber- or silicon-based pressure-sensitive adhesives, among which an acrylate-based pressure-sensitive adhesive is preferable from the viewpoint of transparency and durability. The acrylate-based pressure-sensitive adhesive is preferably an adhesive containing 2-ethylhexyl acrylate, n-butyl acrylate or the like as a major component which, for improvement of cohesive force, is copolymerized with a short-chain alkyl acrylate or methacrylate such as methyl acrylate, ethyl acrylate or methyl methacrylate and with acrylic acid, methacrylic acid, a acrylamide derivative, maleic acid, hydroxyethyl acrylate or glycidyl acrylate capable of serving as a crosslinking point with a crosslinking agent. The mixing ratio and types of the major component, the short-chain component, and the component giving a crosslinking point can be suitably regulated to change glass transition point (Tg) and crosslinking density. A commercial cover sheet having a pressure-sensitive adhesive previously applied thereon can also be used.

The radiation-curable resin used in the hard coat layer may be any resin capable of curing upon irradiation with radiations, and specifically a resin having 2 or more radiation-functional double bonds in its molecule is preferable.
Examples of such a resin include acrylates, acrylamides, methacrylates, methacrylic acid amides, allyl compounds, vinyl ethers, vinyl esters etc. Particularly preferable examples are bifunctional or higher-functional acrylate compounds and methacrylate compounds.

Then, the method of recording information on the optical recording medium of the invention and the method of reproducing recorded information are described.
Recording of information on the optical recording medium is carried out for example in the following manner.
First, the optical recording medium is rotated at a constant linear speed and simultaneously irradiated from the side of the cover sheet (the side opposite to the substrate) with laser light for recording at 350 to 500 nm (preferably, 400 to 440 nm). By irradiation with this laser light, the recording layer absorbs the light to increase its temperature locally thereby generating a physical or chemical change (for example, pit formation) to change its optical characteristics. By this change in optical characteristics, information is recorded.

Examples of the laser light source having an oscillation wavelength of 350 to 500 nm can include, for example, a bluish-purple semiconductor laser having an oscillation wavelength in the range of 390 to 415 nm, a bluish-purple SHG laser having a central oscillation wavelength of about 430 nm, etc.
For increasing recording density, the numerical aperture (NA) of an objective lens used in pickup is preferably 0.7 or more, more preferably 0.80 or more.

On one hand, reproduction of recorded information can be carried out by rotating the optical recording medium at the same linear speed as above and simultaneously irradiating it from the side of the cover sheet with laser light having a wavelength equal to or shorter than the wavelength of the laser used in recording of information, and detecting the reflected light.
Exemplary embodiments of the invention are described below:

<1> An optical recording medium having a recording layer, an intermediate layer, an adhesive layer and a cover sheet in this order on a substrate,
wherein the thickness $t_1$ of the intermediate layer after a high-temperature high-humidity storage test satisfies the relationship:

$$0.8t \leq t_1 \leq 1.2t$$

wherein t is the thickness of the intermediate layer before the high-temperature high-humidity storage test, and the high-temperature high-humidity storage test is a test in which the optical recording medium of the invention including the intermediate layer is stored under conditions of 60°C and 90% RH for 168 hours in a thermostatic chamber and the ratio of change in the thickness of the intermediate layer before and after the storage is examined.

<2> The optical recording medium of <1>, wherein the ratio of change of the intermediate layer after an acid resistance test is within 20%.

<3> The optical recording medium of <1> or <2>, wherein the water permeability coefficient of a cover layer consisting of the adhesive layer and the cover sheet is 100 g/($m^2$·d) or less.

<4> The optical recording medium of any of <1> to <3>, wherein the recording layer comprises a dye.

<5> The optical recording medium of any of <1> to <4>, wherein the intermediate layer comprises tantalum (V) oxide or niobium (V) oxide.

<6> A method for producing an optical recording medium comprising a step of forming at least an organic dye-containing recording layer, an intermediate layer and a cover layer on a substrate,
wherein the intermediate layer is formed by a sputtering method using a rare gas and oxygen gas as a sputtering gas.

<7> The method of <6> for producing an optical recording medium, wherein the ratio of the flow rate of the oxygen gas to the flow rate of the rare gas is from 1/1 to 1/100.

<8> The method of <6> or <7> for producing an optical recording medium, wherein the intermediate layer comprises a metal oxide.

<9> The method of <6> or <7> for producing an optical recording medium, wherein the intermediate layer comprises a metal oxide, and the metal/oxygen ratio in a metal oxide target in the sputtering method is from 10/1 at% to 1/10 at%, and the ratio of the flow rate of the oxygen gas to the flow rate of the rare gas is from 1/1 to 1/100.

<10> The method of <7> or <8> for producing an optical recording medium, wherein the metal oxide is an Nb oxide or a Ta oxide.

<11> An optical recording medium having at least an organic dye-containing recording layer, an intermediate layer and a cover layer on a substrate,
wherein the intermediate layer is formed by a sputtering method using a rare gas and oxygen gas as a sputtering gas.

<12> The optical recording medium of <11>, wherein the intermediate layer comprises an Nb oxide or a Ta oxide.

<13> An optical recording medium having at least an organic dye-containing recording layer, an intermediate layer and a cover layer on a substrate,
wherein the intermediate layer satisfies the following condition expression (1):

$$40\% \leq A/(A+B) \leq 100\% \qquad (1)$$

wherein, in condition expression (1), A represents the proportion of a major component in a stable oxidation state and B represents the proportion of a component in an unstable oxidation state.

<14> The optical recording medium of <13>, wherein the major component in a stable oxidation state and the component in an unstable oxidation state are metal oxides.

<15> The optical recording medium of <14>, wherein the metal oxides are Nb oxides and satisfy the following condition expression (2):

$$40\% \leq A/(A+B) \leq 100\% \qquad (2)$$

wherein, in condition expression (2), A represents the proportion of a major component in a stable oxidation state and B represents the proportion of a component in an unstable oxidation state.

<16> The optical recording medium of <14>, wherein the metal oxides are Ta oxides and satisfy the following condition expression (3):

$$70\% \leq A/(A+B) \leq 100\% \qquad (3)$$

wherein, in condition expression (3), A represents the proportion of a major component in a stable oxidation state and B represents the proportion of a component in an unstable oxidation state.

<17> An optical recording medium having at least an organic dye-containing recording layer, an intermediate layer and a cover layer on a substrate,
wherein the intermediate layer contains a material satisfying the following condition expression (1):

$$0.8t \leq B/A \leq 1 \qquad (1)$$

wherein in the intermediate layer before and after storage in pure water at 60°C for 2 days, A is the peak intensity before the storage and B is the peak intensity after the storage according to an SEM-EDX elemental analysis.
<18> The optical recording medium of <17>, wherein the intermediate layer comprises a metal oxide.
<19> The optical recording medium of <17> or <18>, wherein the intermediate oxide is tantalum (V) oxide or niobium (V) oxide.

The disclosures of Japanese Patent Application Nos. 2005-115870, 2005-115922, 2005-115923, and 2005-115924 are incorporated herein in their entirety by reference.

EXAMPLES

Hereinafter, the present invention will be described in more detail by reference to the Examples, but the invention is not limited thereto.

EXAMPLE 1

A grooved surface of an injection-molded polycarbonate resin (trade name: PAN LIGHT AD5503, polycarbonate manufactured by Teijin Limited) having a spiral groove of 1.1 in thickness mm and 120 mm in diameter (track pitch, 320 nm; groove depth, 45 nm; groove width, 160 nm) was sputtered with Ag to form a reflective layer of 120 nm in thickness thereon.
1.00 g phthalocyanine dye (trade name: ORAZOLE BLUE GN, manufactured by Ciba Speciality Chemical) was dissolved in 100 ml 2,2,3,3-tetrafluoropropanol to prepare a coating solution. This coating solution was applied by spin coating onto the above reflective layer and then annealed at 23°C under 50% RH for 2 hours to form a recording layer.
After heat treatment, an intermediate layer of 10 nm in thickness was formed by a vacuum film-making method using a target consisting of $Nb_2O_{4.83}$ with pulse DC. The input power was 1.5 kW, an Ar gas and $O_2$ gas were used as the sputtering gas, the flow rate of Ar gas was 50 sccm (50 ml/min), and the flow rate of $O_2$ gas was 2 sccm (2 ml/min).
Thereafter, an UV-curable adhesive (SD640 manufactured by Dainippon Ink and Chemicals, Incorporated) was applied by spin coating at 30 to 300 rpm onto an area within 30 mm from the inner periphery, and after a polycarbonate sheet (thickness: 80 μm, PURE ACE manufactured by Teijin Kasei) was superposed as a cover layer (cover sheet) thereon, the adhesive was spread over the whole surface at a varying rate of from 30 rpm to 8000 rpm and cured by irradiation with ultraviolet rays from an UV irradiation lamp, whereby an optical recording medium was prepared.
The water permeability coefficient of the cover layer (the adhesive layer and the cover sheet), as determined by the water penetration measurement method described above, was 72 $g/(m^2 \cdot d)$. The test specimen was prepared by previously described Method 1.

EXAMPLE 2

An optical recording medium was prepared in the same manner as in Example 1 except that the intermediate layer was prepared by the RF method (input power: 1.0 kW) using a target consisting of $Ta_2O_5$.

Example 3

An optical recording medium was prepared in the same manner as in Example 1 except that as the dye, a phthalocyanine-based dye X represented by chemical formula below was used in place of ORAZOLE BLUE GN.

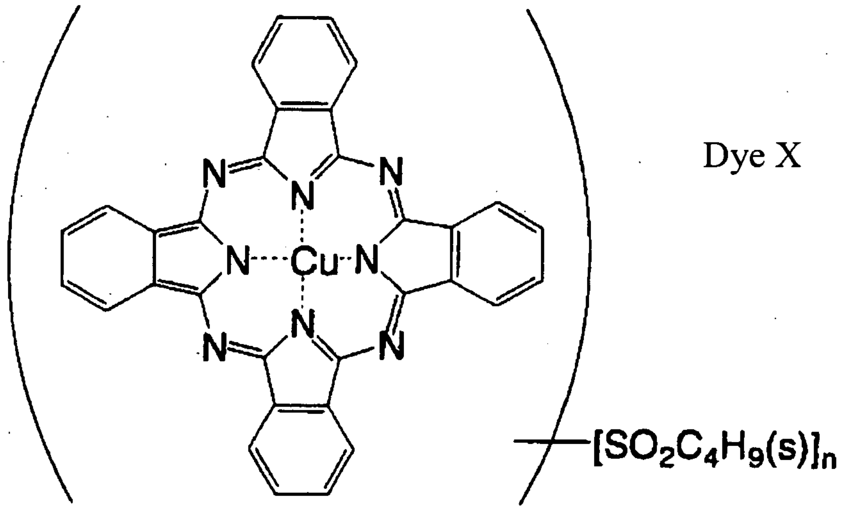

Dye X

COMPARATIVE EXAMPLE 1

An optical recording medium was prepared in the same manner as in Example 1 except that the intermediate layer was prepared by the RF method (input power: 1.0 kW) using a target consisting of $ZnO-Ga_2O_3$.

COMPARATIVE EXAMPLE 2

An optical recording medium was prepared in the same manner as in Example 1 except that the flow rate of $O_2$ in the sputtering gas was 0 sccm (0 ml/min).

COMPARATIVE EXAMPLE 3

An optical recording medium was prepared in the same manner as in Example 1 except that TAC ("FUJITACK", thickness 80 μm, manufactured by Fuji Photo Film Co., Ltd.) was used in place of the polycarbonate sheet.

[Evaluation]

The optical recording media prepared in the Examples and Comparative Examples were evaluated respectively by the following tests.

(High-temperature high-humidity storage test)

The optical recording media prepared in the Examples and Comparative Examples were stored for 168 hours in a high temperature/high humidity chamber kept at 60°C/90%. Recording and reproduction of 17LL modulated signal were carried out with a recording/reproducing unit DDU1000 (manufactured by Pulstec Industrial, Co., Ltd.) having a pickup composed of a bluish-purple laser emitting light at $\lambda$ = 405 nm and an objective lens having a numerical aperture (NA) of 0.85, to determine signal regeneration jitter.

The optical recording medium prepared in each of the Examples and Comparative Examples was prepared in duplicate, and one of them was stored for 168 hours in a high temperature high humidity chamber kept at 60°C and 90% RH. The optical recording medium after storage and the optical recording medium not stored were cut respectively by a (focused-ion-beam) method, and from a SEM photograph of its cut surface, the thickness of the intermediate layer

was determined, and the ratio of change in the thickness was determined from the thickness (t) before storage and the thickness ($t_1$) after storage. The results are shown in Table 8 below.

(Acid resistance)

The intermediate layer was formed on a glass plate under the same conditions as in producing the optical recording medium (the thickness may vary) and then cut into halves, and one of the halves was dipped in 0.1 N aqueous acetic acid solution for 1 day in an environment of 60°C. The change in a peak of an element contained in the intermediate layer (the element is for example "Nb" when the intermediate layer is NbOx) before and after dipping was determined as the ratio of change by SEM-EDAX. The results are shown in Table 8 below.

Table 8

| | High temperature/high humidity storage test | | $t_1/t$ | Acid resistance (%) | water permeability coefficient ($g/m^2 \cdot d$) | Jitter before storage (%) | Jitter after storage (%) |
|---|---|---|---|---|---|---|---|
| | Thickness of the intermediate layer before the test t (nm) | Thickness of the intermediate layer after the test $t_1$ (nm) | | | | | |
| Example 1 | 10 | 9.2 | 0.92 | 5 | 72 | 8.9 | 9.0 |
| Example 2 | 10 | 9.9 | 0.98 | 2 | 72 | 8.2 | 8.9 |
| Example 3 | 10 | 9.2 | 0.92 | 5 | 78 | 8.9 | 9.1 |
| Comparative Example 1 | 10 | 5 | 0.50 | 25 | 79 | 8.9 | 13 |
| Comparative Example 2 | 10 | 7 | 0.70 | 23 | 79 | 8.8 | 12 |
| Comparative Example 3 | 10 | 7.9 | 0.79 | 21 | 400 | 8.8 | 12 |

As can be seen from the results in Table 8, the optical recording media in the Examples, in which the thickness $t_1$ of the intermediate layer after high-temperature and high-humidity storage satisfies the relationship "$0.8t \leq t_1 \leq 1.2t$", exhibited excellent jitter even after storage.

EXAMPLE 4

Polycarbonate resin (trade name: PAN LIGHT AD5503, manufactured by Teijin Kasei) was injection-molded to form a substrate of 1.1 mm in thickness. The groove track pitch of the substrate was 320 nm, the half-value width of the on-groove portion was 120 nm, and the groove depth was 35 nm.

A reflective layer of 100 nm in thickness was formed on the substrate by a vacuum film-making method using a target consisting of 98.4 at% of Ag, 0.7 at% ofNd and 0.9 at% of Cu. The input power was 2 kW, and the flow rate of Ar was 5 sccm.

Organic dye A represented by the chemical formula below was weighed out and dissolved at a concentration of 2 g/100 ml TFP. The resulting solution was sonicated for 2 hours to dissolve the dye, then left in an environment of 23°C/50% RH for 0.5 hour or more, and filtered through a 0.2 μm filter. The filtrate was used in spin coating to form a recording layer of 110 nm in thickness on the reflective layer. Thereafter, the sample was thermally treated for 1 hour in a clean oven at 80°C.

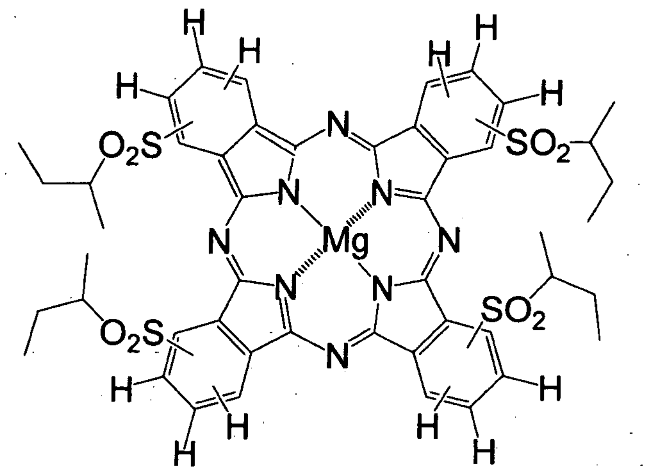

Organic Dye A

After the thermal treatment, an intermediate layer of 8 nm in thickness was formed by a vacuum film-making method using a target consisting of $Nb_2O_{4.83}$ in pulse DC sputtering. The input power was 1.5 kW, Ar and $O_2$ were used as the sputtering gas, the flow rate of Ar was 10 sccm, and the flow rate of $O_2$ was 2 sccm.

After the intermediate layer was formed, a polycarbonate film (thickness 80 μm) having an adhesive layer of 20 μm in thickness formed on one side thereof was attached thereto to prepare an optical recording medium.

EXAMPLE 5

An optical recording medium was prepared in the same manner as in Example 4 except that the flow rate of $O_2$ in forming the intermediate layer was 1 seem.

COMPARATIVE EXAMPLE 4

An optical recording medium was prepared in the same manner as in Example 4 except that in forming the intermediate layer, only an Ar gas was used without using $O_2$.

[Evaluation]

- Evaluation of stains -

(1) Each of the prepared optical recording media was examined by observing the surface of the dye recording layer from the side of the polycarbonate film under a telecentric microscope TL-10 manufactured by KOWA to determine the presence or absence of stained defects. The observation results were evaluated according to the following evaluation criteria. The results are shown in Table 9.

- Evaluation criteria -

C: Evident stained defects are observed when the optical recording medium is left in a stationary state.
B: Stained defects are not observed when the optical recording medium is left in a stationary state, but when the optical recording medium is moved, a change in contrast is felt in a visual field under observation (= occurrence of very weak stained defects is estimated).
A: Defects are not observed when the optical recording medium is left in a stationary state nor when the optical

recording medium is moved.

(2) The optical recording medium was left at room temperature and evaluated after 11 and 22 days respectively in the same manner as in (1) above. The results are shown in Table 9.

Table 9

| Evaluation of stained defects | Ar/O2 | Day 1 | Day 11 | Day 22 | Comprehensive evaluation |
|---|---|---|---|---|---|
| Example 4 | 10/2 | A | A | A | very good |
| Example 5 | 10/1 | A | A | B | good |
| Comparative Example 4 | 10/- | A | C | C | bad |

- Signal characteristics -

The prepared sample was set in a DDU-1000 (manufactured by Pulstec Industrial, Co., Ltd.) equipped with a laser optical system with a wavelength of 407 nm and NA = 0.85, and evaluated for its 8T signal with an analogue oscilloscope by recording and regenerating 8T single signal, thereby determining 8T signal amplitude/8T signal H level as 8T modulation depth. The linear speed was 5.28 m/s, and the laser emission pattern at the time of recording was optimized for evaluation. After 11 day, the same measurement was carried out to determine "1-(8T modulation depth on Day 11/8T modulation depth on Day 1)" as the ratio of change. The results are shown in Table 10.

Table 10

| | Day 1 | Day 11 | Ratio of change |
|---|---|---|---|
| Example 4 | 0.6 | 0.576 | 0.04 |
| Example 5 | 0.604 | 0.573 | 0.05 |
| Comparative Example 4 | 0.6 | 0.56 | 0.07 |

Four days after preparation, the sample was set in a DDU-1000 (manufactured by Pulstec Industrial, Co., Ltd.) equipped with a laser optical system with a wavelength of 407 nm and NA = 0.85, and evaluated for its 2T signal carrier output (16.5 MHz) with a spectrum analyzer by recording and regenerating 2T single signal at 4 mW power. The linear speed was 5.28 m/s, and the laser emission pattern at the time of recording was optimized for evaluation. After 18 days, the same measurement was carried out to determine "1-(CN ratio on Day 18/CN ratio on Day 4)" as the ratio of change. The results are shown in Table 11.

Table 11

| | Day 4 | Day 18 | Ratio of change |
|---|---|---|---|
| Example 4 | 41.4 | 40.8 | 0.01 |
| Example 5 | 41.8 | 41.0 | 0.02 |
| Comparative Example 4 | 44.3 | 42.7 | 0.04 |

As can be seen from Table 9, the optical recording media in Examples 4 to 5 were not practically problematic even after storage for 1 to 22 days, while the optical recording medium in Comparative Example 4 was recognized to have stained defects after storage for 11 days.

As can be seen from Table 10, the optical recording media in Examples 4 to 5 showed a lower ratio of change in modulation depth even after storage for 1 to 11 days than that of the optical recording medium in Comparative Example 4, thus indicating excellent temporal stability.

As can be seen from Table 11, the optical recording media in Examples 4 to 5 showed a lower ratio of change in CNR even after storage for 1 to 18 days than that of the optical recording medium in Comparative Example 4, thus indicating

excellent temporal stability.

EXAMPLE 6

An optical recording medium was prepared in the same manner as in Example 4 except that the thickness of the intermediate layer was 50 nm or more.

EXAMPLE 7

An optical recording medium was prepared in the same manner as in Example 6 except that the flow rate of $O_2$ in forming the intermediate layer was 1 sccm and the thickness of the intermediate layer was 8 nm.

EXAMPLE 8

An optical recording medium was prepared in the same manner as in Example 6 except that the thickness of the intermediate layer was 8 nm.

EXAMPLE 9

An optical recording medium was prepared in the same manner as in Example 6 except that the target in forming the intermediate layer was changed into $Ta_2O_5$, and in forming the intermediate layer, only an Ar gas was used without using $O_2$.

EXAMPLE 10

An optical recording medium was prepared in the same manner as in Example 6 except that the target in forming the intermediate layer was changed into $Ta_2O_5$, and the flow rate of $O_2$ in forming the intermediate layer was 2 sccm.

EXAMPLE 11

An optical recording medium was prepared in the same manner as in Example 6 except that the target in forming the intermediate layer was changed into $Ta_2O_5$, and the flow rate of $O_2$ in forming the intermediate layer was 10 sccm.

COMPARATIVE EXAMPLE 5

An optical recording medium was prepared in the same manner as in Example 6 except that in forming the intermediate layer, only an Ar gas was used without using $O_2$.

COMPARATIVE EXAMPLE 6

An optical recording medium was prepared in the same manner as in Example 6 except that the flow rate of $O_2$ in forming the intermediate layer was 1 sccm.

COMPARATIVE EXAMPLE 7

An optical recording medium was prepared in the same manner as in Example 6 except that in forming the intermediate layer, only an Ar gas was used without using $O_2$, and the thickness of the intermediate layer was 8 nm.

[Evaluation]

<<Measurement of proportion of oxides>>

Using an X-ray photoelectron spectrometer (AXIS ULTRA manufactured by Shimadzu Corporation), each of the prepared optical recording media was analyzed for its surface two minutes after Ar sputtering, and the resulting metal peaks were separated, and a metal peak having the maximum oxidation number was called up to determine its peak area proportion from which the ratio of the major component was then determined. The resulting metal peaks are

shown in Figs. 3 to 11.

[Measurement conditions: Anode, monochrome Al; Step, 100 eV; Pass energy, 10 eV; Sweep number, 3 times]

Conditions for analysis of NbOx and TaOx films are shown in Table 12.

Table 12

| | $Nb_2O_5$ | $Nb_2O_5$ | $Ta_2O_5$ |
|---|---|---|---|
| Film thickness | 50 nm or more | 8nm | 50 nm or more |
| Ar sputtering time | 3~4min | 1 | 2 |
| Measured metals and measured peaks | Nb<br>3d5/2<br>3d3/2 | Nb<br>3d5/2<br>3d3/2 | Ta<br>4f7/2<br>4f5/2 |
| Maximum oxidation number | 5 | 5 | 5 |
| Peak separation condition | 3d5/2:3d3/2 | 3d5/2:3d3/2 | 4f7/2:4f5/2 |
| ΔBindingEnergy[ev] | 2.72 | 2.72 | 1.9 |
| Peak half-value width ratio | 0.83 | 0.83 | 1 |
| Peak intensity ratio | 0.63 | 0.63 | 0.88 |

<<Examination of outward appearance>>

Each of the prepared optical recording media was examined by observing the surface of the dye recording layer from the side of the polycarbonate film under a telecentric microscope TL-10 manufactured by KOWA to determine the presence or absence of stained defects. The observation results were evaluated according to the following evaluation criteria. The results are shown in Table 13.

- Evaluation criteria -

A: Defects are not observed when the optical recording medium is left in a stationary state nor when the optical recording medium is moved.

B: Stained defects are not observed when the optical recording medium is left in a stationary state, but when the optical recording medium is moved, a change in contrast is felt in a visual field under observation (= occurrence of very weak stained defects is estimated), but is at practically unproblematic level.

C: Evident stained defects are observed when the optical recording medium is left in a stationary state.

Table 13

| | Example 6 | Example 7 | Example 8 | Example 9 | Example 10 | Example 11 | Comparative Example 5 | Comparative Example 6 | Comparative Example 7 |
|---|---|---|---|---|---|---|---|---|---|
| Material | NbOx | NbOx | NbOx | TaOx | TaOx | TaOx | NbOx | NbOx | NbOx |
| Film thickness | 50 nm or more | 8nm | 8nm | 50 run or more | 50 nm or more | 50 mn or more | 50 nm or more | 50 nm or more | 8nm |
| $O_2$ flow rate (sccm) | 2 | 1 | 2 | 0 | 2 | 10 | 0 | 1 | 0 |
| Ratio [%] of component in stable oxidation state | 47 | 57 | 59 | 78 | 100 | 100 | 31 | 30 | 31 |
| Examination of outward appearance | A | B | A | A | A | A | C | C | C |
| Modulation depth | - | a-1 | b-1 | - | - | - | - | - | c-1 |
| CN ratio | - | a-2 | b-2 | - | - | - | - | - | c-2 |

<<Recording characteristics>>

- Signal characteristics -

The prepared sample was set in a DDU-1000.(manufactured by Pulstec Industrial, Co., Ltd.) equipped with a laser optical system with a wavelength of 407 nm and NA = 0.85, and evaluated for its 8T signal with an analogue oscilloscope by recording and regenerating 8T single signal, thereby determining 8T signal amplitude/8T signal H level as 8T modulation depth. The linear speed was 5.28 m/s, and the laser emission pattern at the time of recording was optimized for evaluation. After 11 day, the same measurement was carried out to determine "1-(8T modulation depth on Day 11/8T modulation depth on Day 1)" as the ratio of change. The results are shown in Table 13 (Table 14). "a-1", "b-1", and "c-1" in Table 13 correspond to the same symbols in Table 14.

Table 14

| | Ratio of sputtering gas flow rate | Day 1 | Day 11 | Ratio of change |
|---|---|---|---|---|
| b-1 | $O_2$/Ar=2/10 | 0.6 | 0.576 | 0.04 |
| a-1 | $O_2$/Ar=2/10 | 0.604 | 0.573 | 0.05 |
| c-1 | $O_2$/Ar=2/10 | 0.6 | 0.56 | 0.07 |

Four days after preparation, the sample was set in a DDU-1000 (manufactured by Pulstec Industrial, Co., Ltd.) equipped with a laser optical system with a wavelength of 407 nm and NA = 0.85, and evaluated for its 2T signal carrier output (16.5 MHz) with a spectrum analyzer by recording and regenerating 2T single signal at 4 mW power. The linear speed was 5.28 m/s, and the laser emission pattern at the time of recording was optimized for evaluation. After 18 days, the same measurement was carried out to determine "1-(CN ratio on Day 18/CN ratio on Day 4)" as the ratio of change. The results are shown in Table 13 (Table 15). "a-2", "b-2", and "c-2" in Table 13 correspond to the same symbols in Table 15.
In the examples except for Examples 6 and 7 and Comparative Example 7, the intermediate layer was so thick that the optimum recording characteristics were not evaluated.

Table 15

| | Ratio of sputtering gas flow rate | Day 4 | Day 18 | Ratio of change |
|---|---|---|---|---|
| b-2 | $O_2$/Ar=2/10 | 41.4 | 40.8 | 0.01 |
| a-2 | $O_2$/Ar=2/10 | 41.8 | 41.0 | 0.02 |
| c-2 | $O_2$/Ar=2/10 | 44.3 | 42.7 | 0.04 |

As can be seen from Table 13, the optical recording media in Examples 6 to 11 were excellent in outward appearance as compared with that in Comparative Examples 5 to 7. Particularly, Examples 7 and 8 also gave excellent results in respect of recording characteristics.

EXAMPLE 12

An optical recording medium was prepared in the same manner as in Example 4.

EXAMPLE 13

An optical recording medium was prepared in the same manner as in Example 12 except that the sputtering target in forming the intermediate layer was $Ta_2O_5$ and the layer was formed by the RF sputtering method.

COMPARATIVE EXAMPLE 8

An optical recording medium was prepared in the same manner as in Example 12 except that the sputtering target in forming the intermediate layer was $Ta_2O_5$, the layer was formed by the RF sputtering method, and the sputtering

gas was Ar only.

COMPARATIVE EXAMPLE 9

An optical recording medium was prepared in the same manner as in Example 12 except that the sputtering target in forming the intermediate layer was $ZnO{\cdot}Ga_2O_3$.

COMPARATIVE EXAMPLE 10

An optical recording medium was prepared in the same manner as in Example 12 except that the sputtering target in forming the intermediate layer was $ZnO{\cdot}SiO_2$ and the sputtering gas was Ar only.

COMPARATIVE EXAMPLE 11

An optical recording medium was prepared in the same manner as in Example 12 except that the sputtering target in forming the intermediate layer was $MnO_x$ and the sputtering gas was Ar only.

[Evaluation]

- Measurement of peak intensity ratio -

An intermediate layer of 50 nm in thickness was formed on a substrate in the same manner and using the same material, as in each of Examples 12 to 13 and Comparative Examples 8 to 11, and samples of the intermediate layers corresponding to the respective examples were obtained. That is, the characteristics of each sample were assumed to be the characteristics of the intermediate layer of each optical recording medium, and the following measurement was carried out. Each sample was measured for peak intensity (peak intensity A) attributable to the intermediate layer by SEM-EDX (S-4700, manufactured by Hitachi, Ltd.) elemental analysis. Then, the sample was stored in pure water at 60°C for 2 days and then measured for peak intensity (peak intensity B) in the same manner, and the peak intensity ratio (B/A) between before and after storage was determined. The results are shown in Table 16.

- Evaluation of jitter -

The prepared optical recording medium was set in a DDU-1000 (manufactured by Pulstec Industrial, Co., Ltd.) equipped with a laser optical system with a wavelength of 403 nm and NA = 0.85, and evaluated for its jitter by recording 1-7 modulated random signals (2T to 8T) at 5.5 mW power, and then generating the signals at 0.35 mW powder. The linear speed was 5.28 m/s, and the laser emission pattern at the time of recording was optimized for evaluation. The jitter was measured with a conventional equalizer. The results are shown in Table 1. A sample showing 15% or less jitter (shelf jitter) after storage at 60°C and 90% RH for 168 hours is preferable.

Table 16

| | Material | Peak intensity ratio | Sputtering gas (containing oxygen) | Shelf jitter (%) |
|---|---|---|---|---|
| Example 12 | $Nb_2O_5$ | 0.9 | containing oxygen | 14 |
| Example 13 | $Ta_2O_5$ | 1 | containing oxygen | 14 |
| Comparative Example 8 | $ZnO{\cdot}Ga_2O_3$ | 0 | not containing oxygen | 21 |
| Comparative Example 9 | $ZnO{\cdot}Ga_2O_3$ | 0.2 | containing oxygen | 19 |
| Comparative Example 10 | $ZnS{\cdot}SiO_2$ | 0 | not containing oxygen | 22 |
| Comparative Example 11 | $Mo_2O_x$ | 0.1 | not containing oxygen | 20 |

As can be seen from Table 16, the optical recording media in Examples 12 to 13, which are in the range of the condition expression (1), exhibit 15% or less shelf jitter to give superior results compared to the optical recording media in Comparative Examples 8 to 11. This is supposedly due to the low water solubility and excellent humidity/heat storage stability of the intermediate layer.

According to the invention, there can be provided an optical recording medium maintaining recording/reproducing characteristics in a high level. There can also be provided an optical recording medium excellent in temporal stability without a stained oxygen deficiency in the intermediate layer, as well as a method of producing the same. Further, an optical recording medium excellent in outward appearance can be provided. In addition, an optical recording medium excellent in humidity/heat storage stability and attaining excellent recording characteristics can also be provided.
All publications, patent applications, and technical standards mentioned in this specification are herein incorporated by reference to the same extent as if each individual publication, patent application, or technical standard was specifically and individually indicated to be incorporated by reference.

## Claims

1. An optical recording medium having a recording layer, an intermediate layer, an adhesive layer and a cover sheet in this order on a substrate,
wherein the thickness $t_1$ of the intermediate layer after a high-temperature high-humidity storage test satisfies the relationship:

$$0.8t \leq t_1 \leq 1.2t$$

wherein t is the thickness of the intermediate layer before the high-temperature high-humidity storage test, and the high-temperature high-humidity storage test is a test in which the optical recording medium of the invention including the intermediate layer is stored under conditions of 60°C and 90% RH for 168 hours in a thermostatic chamber and the ratio of change in the thickness of the intermediate layer before and after the storage is examined.

2. The optical recording medium according to claim 1, wherein the ratio of change of the intermediate layer after an acid resistance test is within 20%.

3. The optical recording medium according to claim 1 or 2, wherein the water permeability coefficient of a cover layer consisting of the adhesive layer and the cover sheet is 100 g/($m^2$·d) or less.

4. The optical recording medium according to claim 1 or 2, wherein the recording layer comprises a dye.

5. The optical recording medium according to claim 1 or 2, wherein the intermediate layer comprises tantalum (V) oxide or niobium (V) oxide.

6. A method of producing an optical recording medium comprising a step of forming at least an organic dye-containing recording layer, an intermediate layer and a cover layer on a substrate,
wherein the intermediate layer is formed by a sputtering method using a rare gas and oxygen gas as a sputtering gas.

7. The method of producing an optical recording medium according to claim 6, wherein the ratio of the flow rate of the oxygen gas to the flow rate of the rare gas is from 1/1 to 1/100.

8. The method of producing an optical recording medium according to claim 6 or 7, wherein the intermediate layer comprises a metal oxide.

9. The method of producing an optical recording medium according to claim 6 or 7, wherein the intermediate layer comprises a metal oxide, and the metal/oxygen ratio in a metal oxide target in the sputtering method is from 10/1 at% to 1/10 at%, and the ratio of the flow rate of the oxygen gas to the flow rate of the rare gas is from 1/1 to 1/100.

10. The method of producing an optical recording medium according to claim 8, wherein the metal oxide is an Nb oxide or a Ta oxide.

11. An optical recording medium having at least an organic dye-containing recording layer, an intermediate layer and a cover layer on a substrate,
wherein the intermediate layer is formed by a sputtering method using a rare gas and oxygen gas as a sputtering gas.

**12.** The optical recording medium according to claim 11, wherein the intermediate layer comprises an Nb oxide or a Ta oxide.

**13.** An optical recording medium having at least an organic dye-containing recording layer, an intermediate layer and a cover layer on a substrate,
wherein the intermediate layer satisfies the following condition expression (1):

$$40\% \leq A/(A+B) \leq 100\% \qquad (1)$$

wherein, in condition expression (1), A represents the proportion of a major component in a stable oxidation state and B represents the proportion of a component in an unstable oxidation state.

**14.** The optical recording medium according to claim 13, wherein the major component in a stable oxidation state and the component in an unstable oxidation state are metal oxides.

**15.** The optical recording medium according to claim 14, wherein the metal oxides are Nb oxides and satisfy the following condition expression (2):

$$40\% \leq A/(A+B) \leq 100\% \qquad (2)$$

wherein, in condition expression (2), A represents the proportion of a major component in a stable oxidation state and B represents the proportion of a component in an unstable oxidation state.

**16.** The optical recording medium according to claim 14, wherein the metal oxides are Ta oxides and satisfy the following condition expression (3):

$$70\% \leq A/(A+B) \leq 100\% \qquad (3)$$

wherein, in condition expression (3), A represents the proportion of a major component in a stable oxidation state and B represents the proportion of a component in an unstable oxidation state.

**17.** An optical recording medium having at least an organic dye-containing recording layer, an intermediate layer and a cover layer on a substrate,
wherein the intermediate layer contains a material satisfying the following condition expression (1):

$$0.8 \leq B/A \leq 1 \qquad (1)$$

wherein in the intermediate layer before and after storage in pure water at 60°C for 2 days, A is the peak intensity before the storage and B is the peak intensity after the storage according to an SEM-EDX elemental analysis.

**18.** The optical recording medium according to claim 17, wherein the intermediate layer comprises a metal oxide.

**19.** The optical recording medium according to claim 17 or 18, wherein the intermediate oxide is tantalum (V) oxide or niobium (V) oxide.

Fig. 1

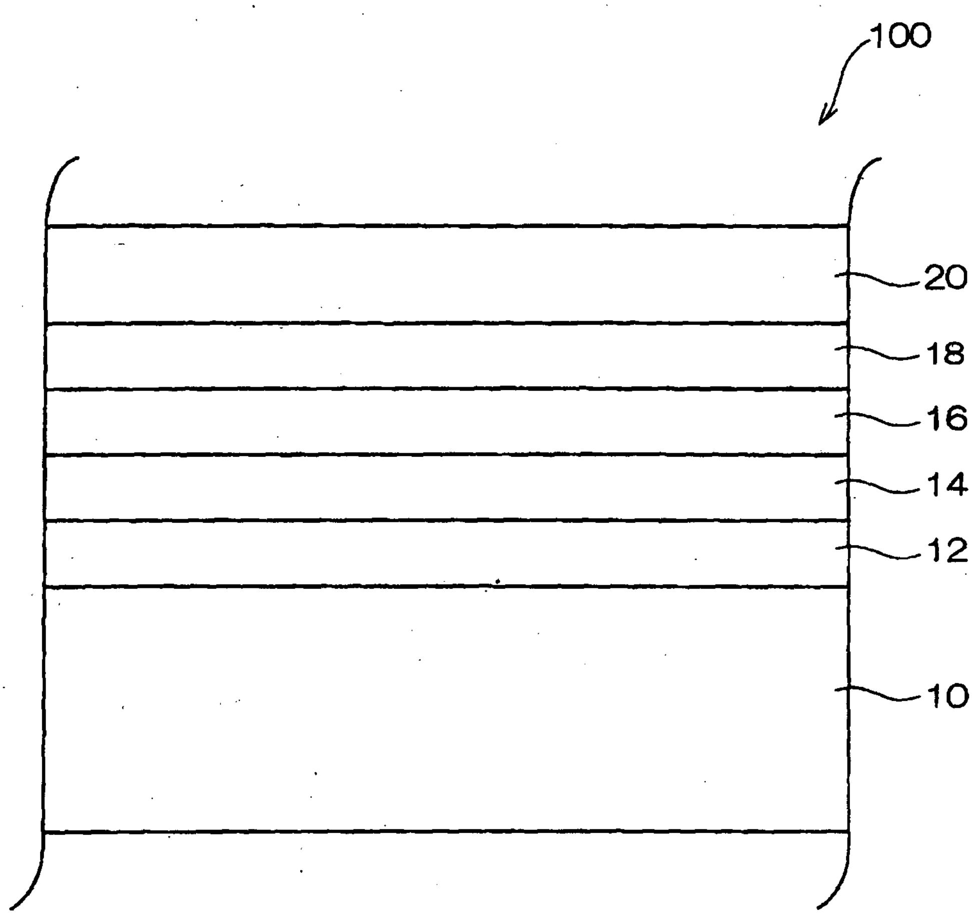

Fig. 2

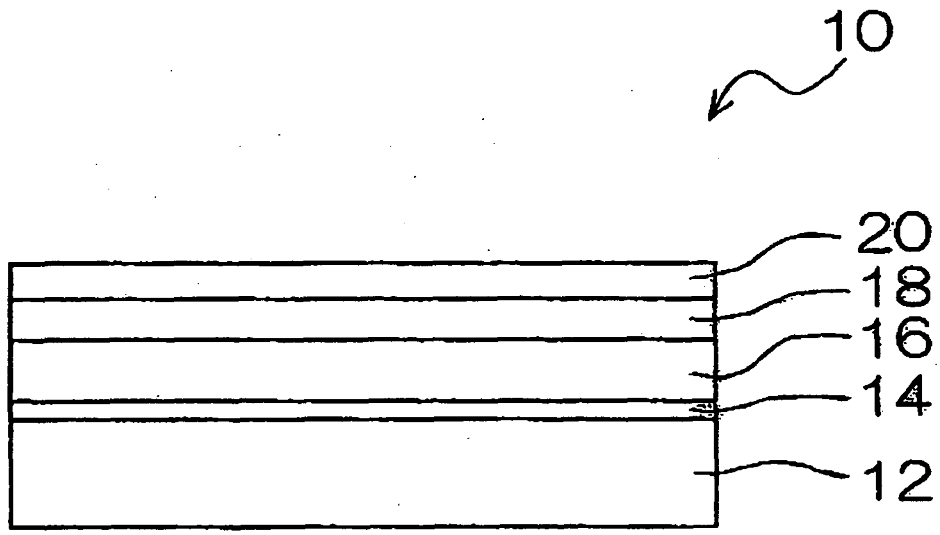

Fig. 3

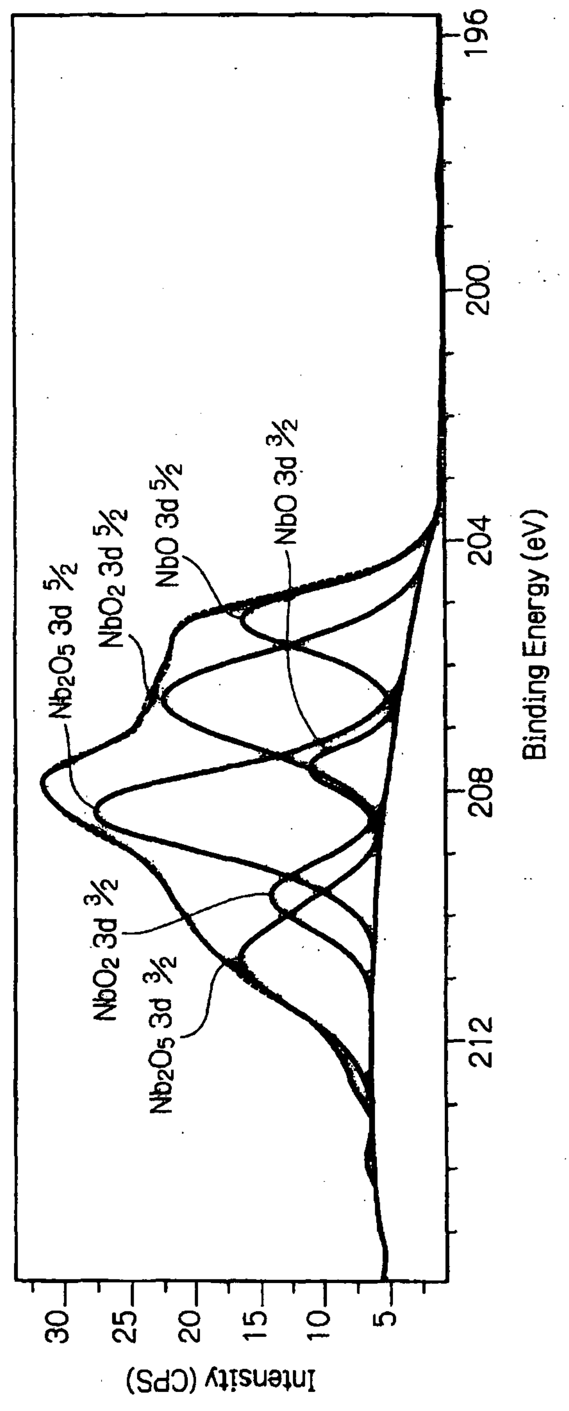
Intensity (CPS)
30
25
20
15
10
5
Binding Energy (eV)
212
208
204
200
196
Nb2O5 3d 5/2
NbO2 3d 5/2
NbO 3d 5/2
NbO 3d 3/2
NbO2 3d 3/2
Nb2O5 3d 3/2

Fig. 4

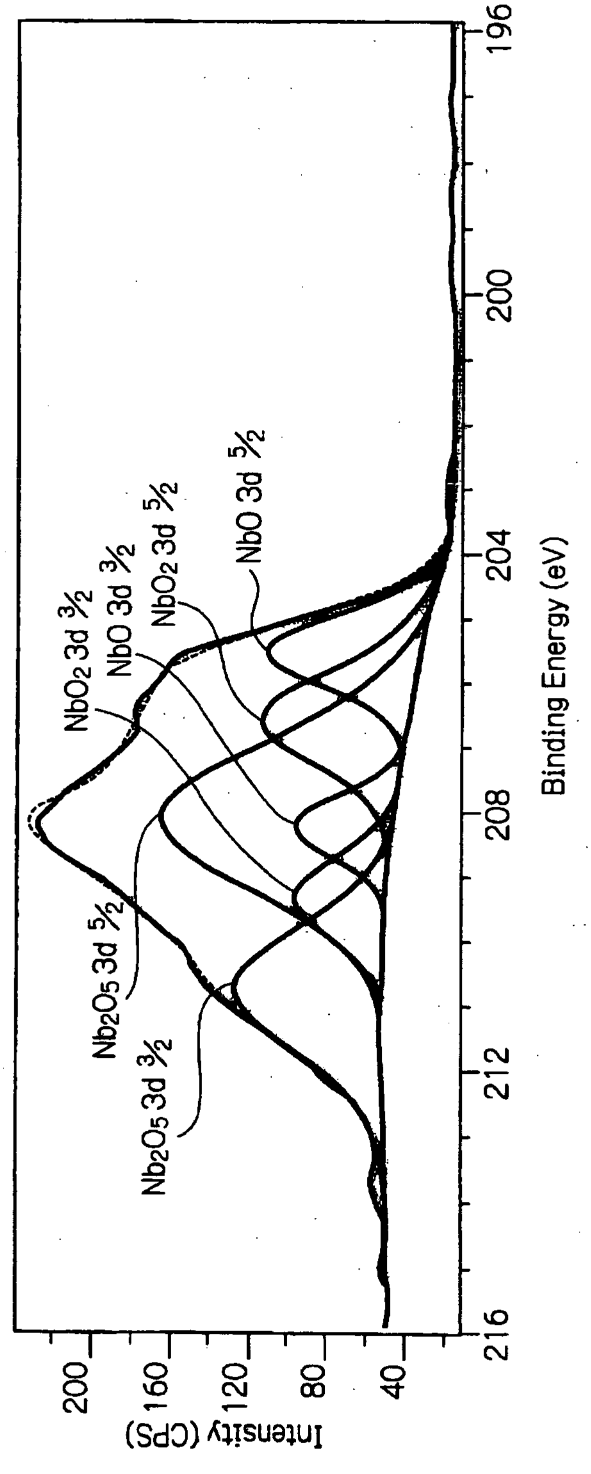

Intensity (CPS)
200
160
120
80
40
216
212
208
204
200
196
Binding Energy (eV)
Nb2O5 3d 3/2
Nb2O5 3d 5/2
NbO2 3d 3/2
NbO 3d 3/2
NbO2 3d 5/2
NbO 3d 5/2

Fig. 5

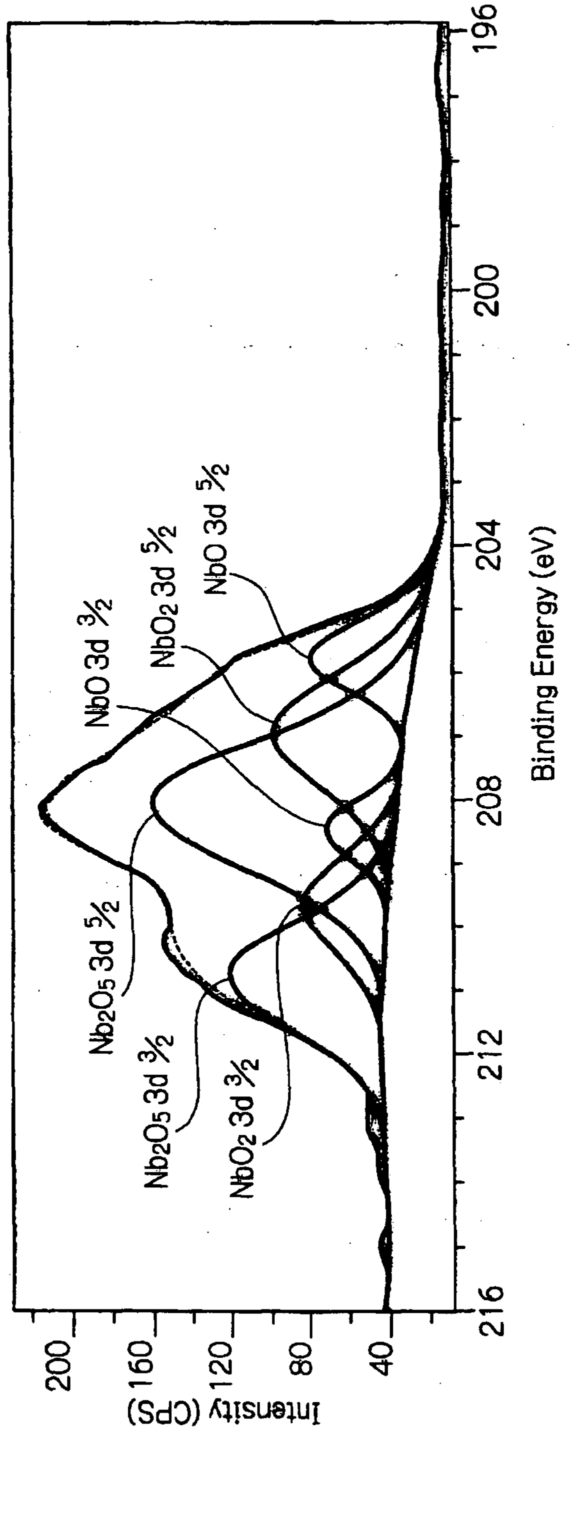

Intensity (CPS)
200
160
120
80
40
216
212
208
204
200
196
Binding Energy (eV)
NbO 3d 3/2
NbO2 3d 5/2
NbO 3d 5/2
Nb2O5 3d 5/2
Nb2O5 3d 3/2
NbO2 3d 3/2

Fig. 6A

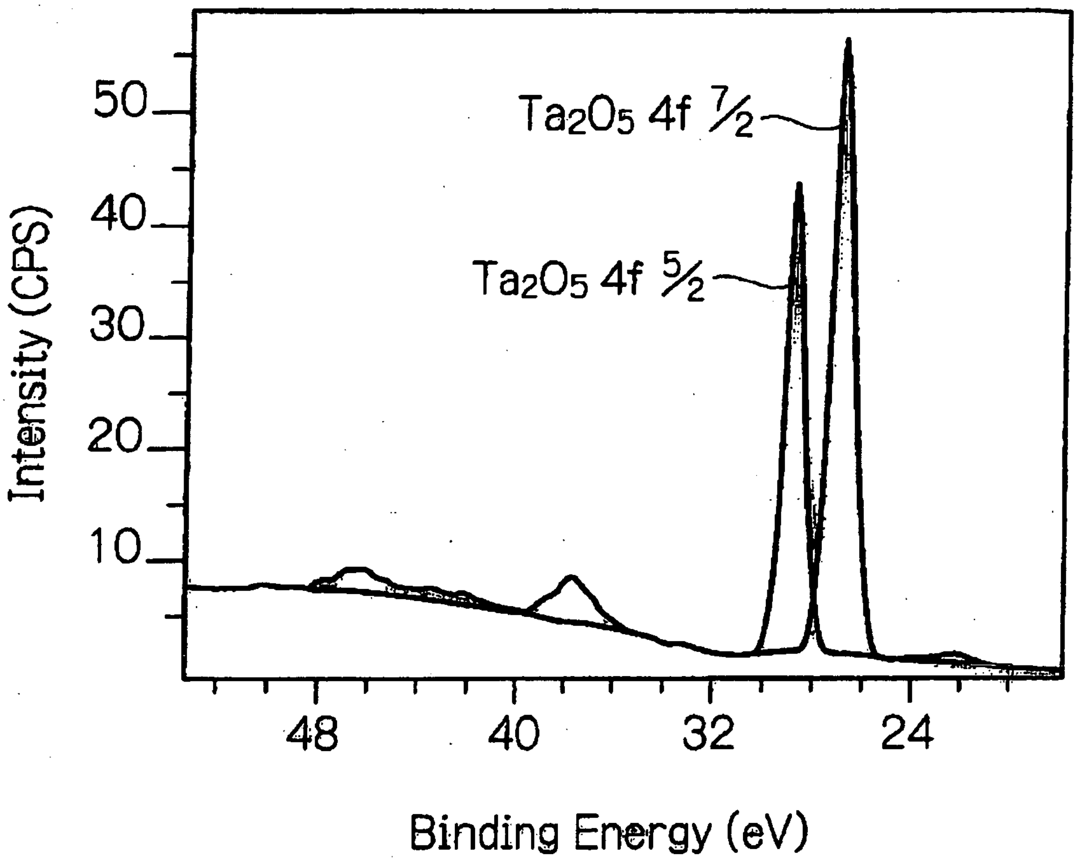
Ta2O5 4f 7/2
Ta2O5 4f 5/2
Intensity (CPS)
50
40
30
20
10
48
40
32
24
Binding Energy (eV)

Fig. 6B

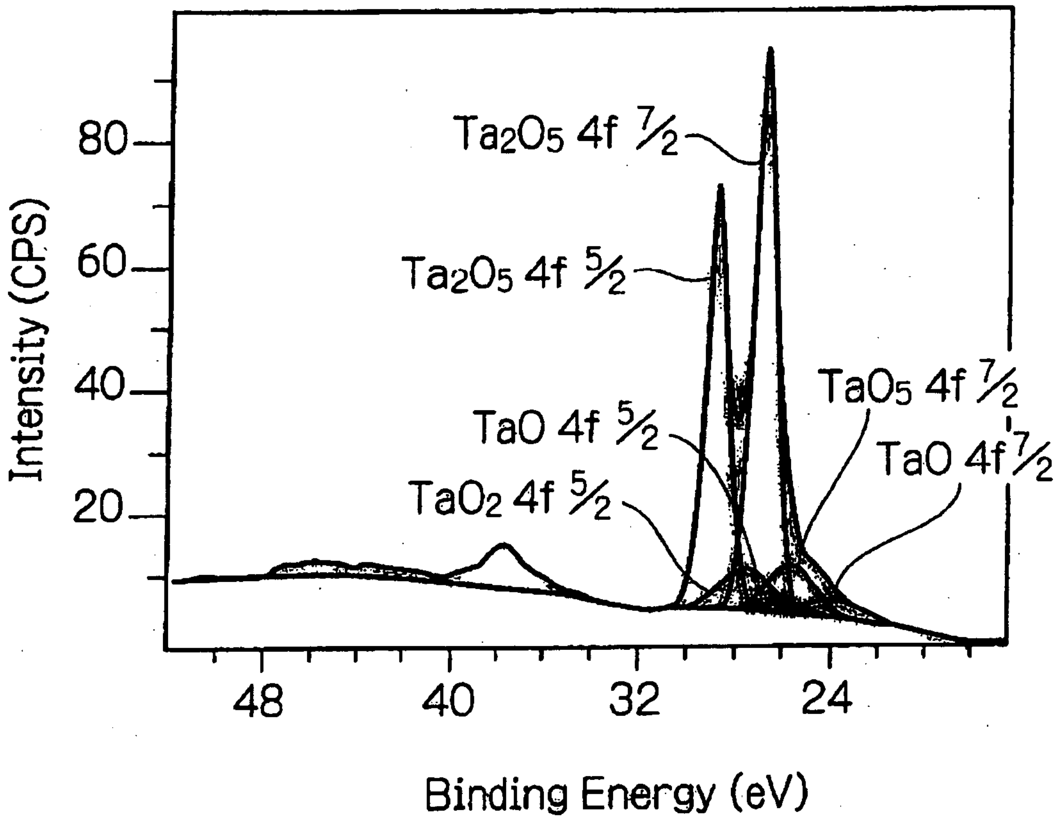
Intensity (CPS)
80
60
40
20
48
40
32
24
Binding Energy (eV)
Ta2O5 4f 7/2
Ta2O5 4f 5/2
TaO5 4f 7/2
TaO 4f 5/2
TaO 4f 7/2
TaO2 4f 5/2

Fig. 7A

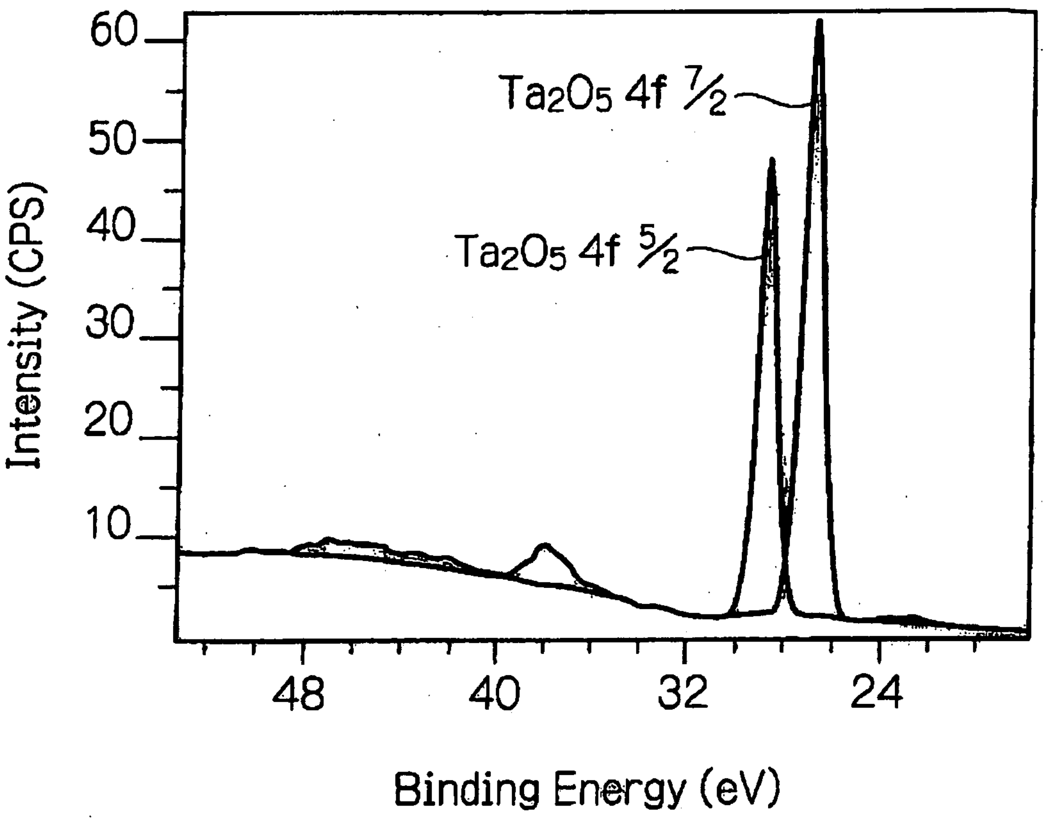
Intensity (CPS)
60
50
40
30
20
10
Ta2O5 4f 7/2
Ta2O5 4f 5/2
48
40
32
24
Binding Energy (eV)

Fig. 7B

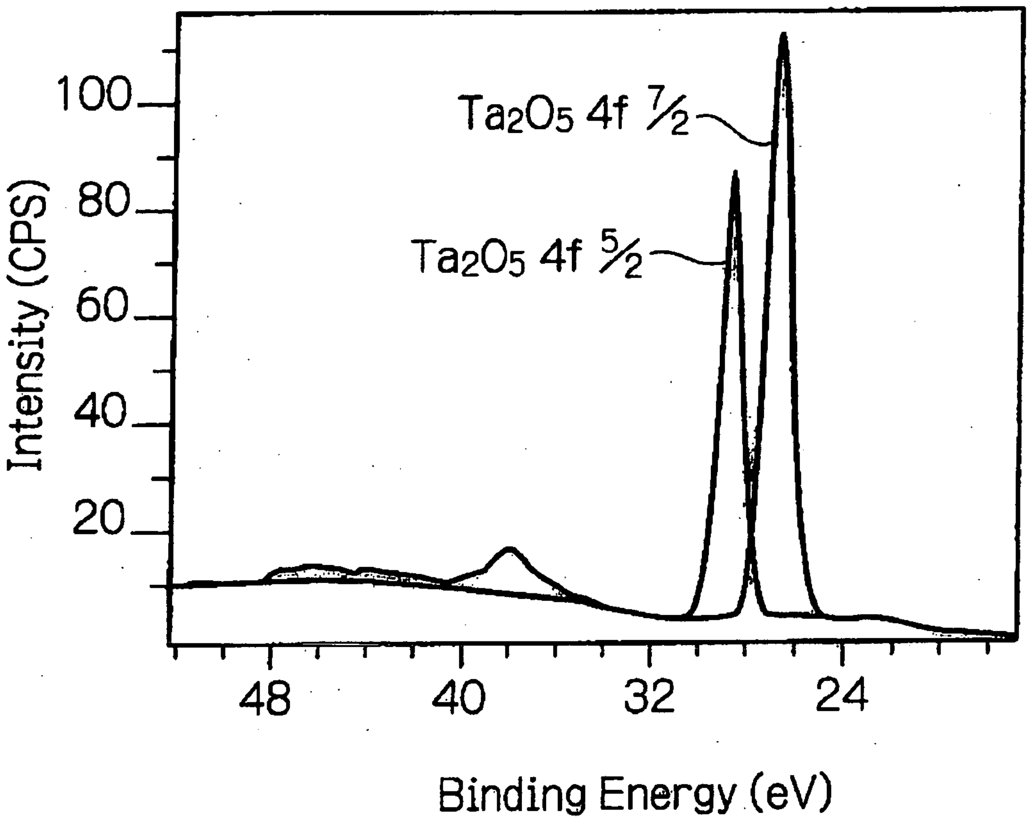
Intensity (CPS)
100
80
60
40
20
Ta2O5 4f 7/2
Ta2O5 4f 5/2
48
40
32
24
Binding Energy (eV)

Fig. 8A

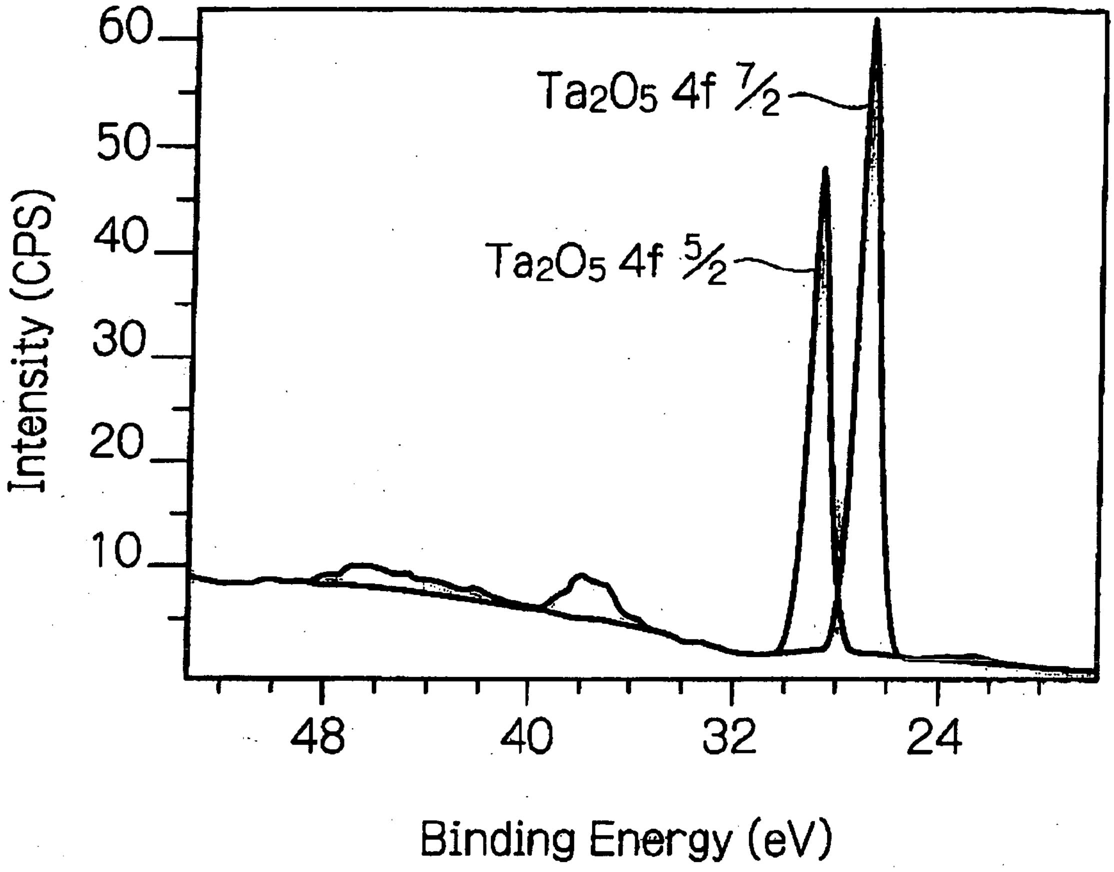
Ta2O5 4f 7/2
Ta2O5 4f 5/2
60
50
40
30
20
10
Intensity (CPS)
48
40
32
24
Binding Energy (eV)

Fig. 8B

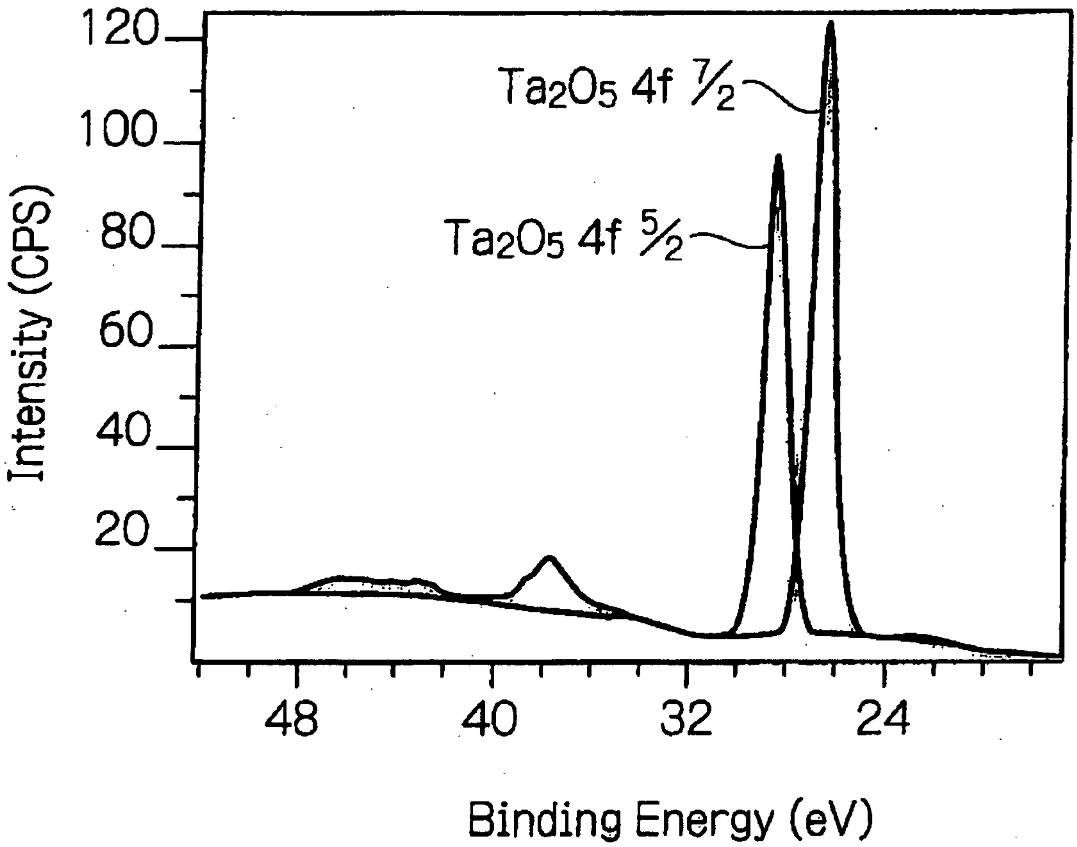
Ta2O5 4f 7/2
Ta2O5 4f 5/2
Intensity (CPS)
120
100
80
60
40
20
48
40
32
24
Binding Energy (eV)

Fig. 9

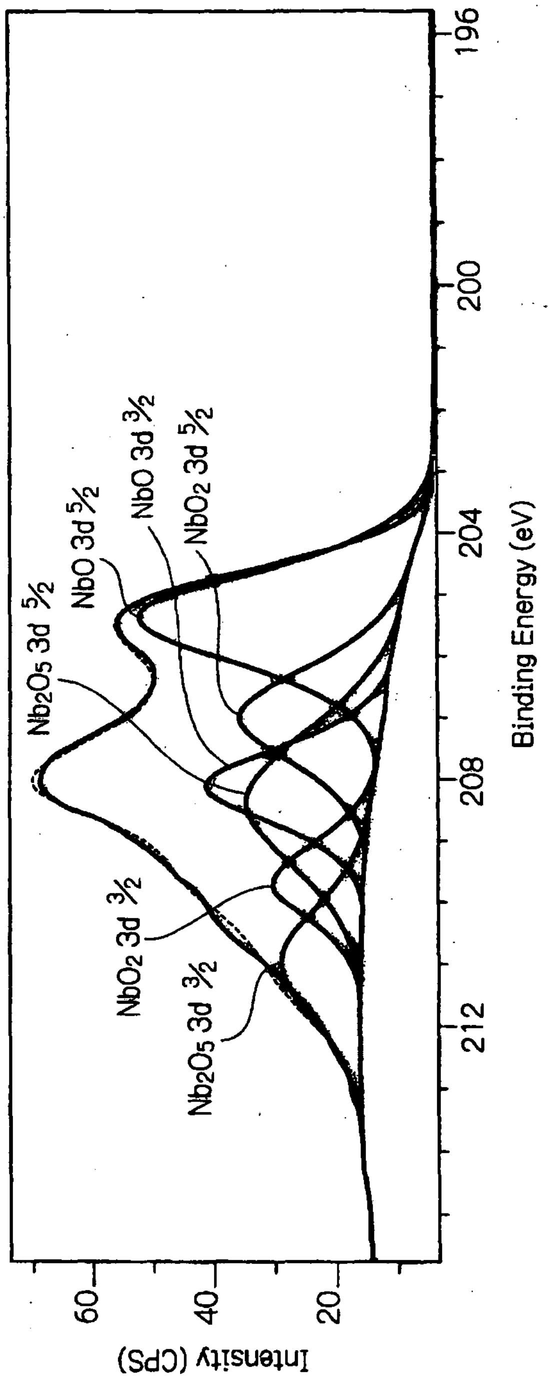
Intensity (CPS)
60
40
20
Binding Energy (eV)
212
208
204
200
196
Nb2O5 3d 5/2
NbO 3d 5/2
NbO 3d 3/2
NbO2 3d 5/2
NbO2 3d 3/2
Nb2O5 3d 3/2

Fig. 10

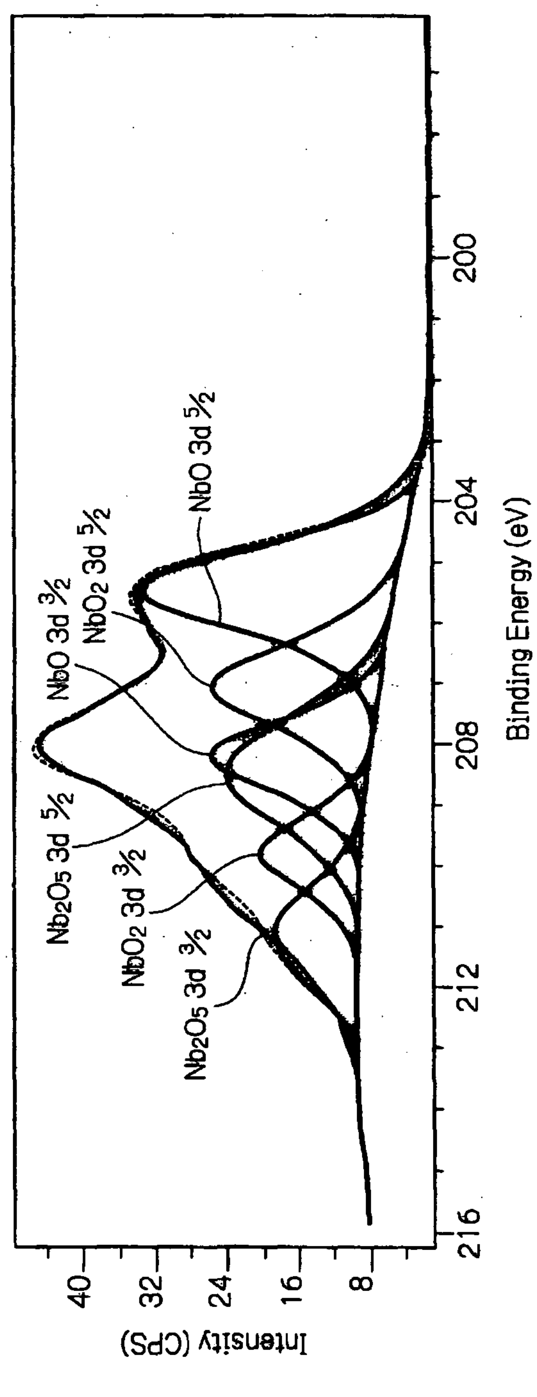
Intensity (CPS)
40
32
24
16
8
216
212
208
204
200
Binding Energy (eV)
NbO 3d 5/2
NbO2 3d 5/2
NbO 3d 3/2
Nb2O5 3d 5/2
NbO2 3d 3/2
Nb2O5 3d 3/2

Fig. 11

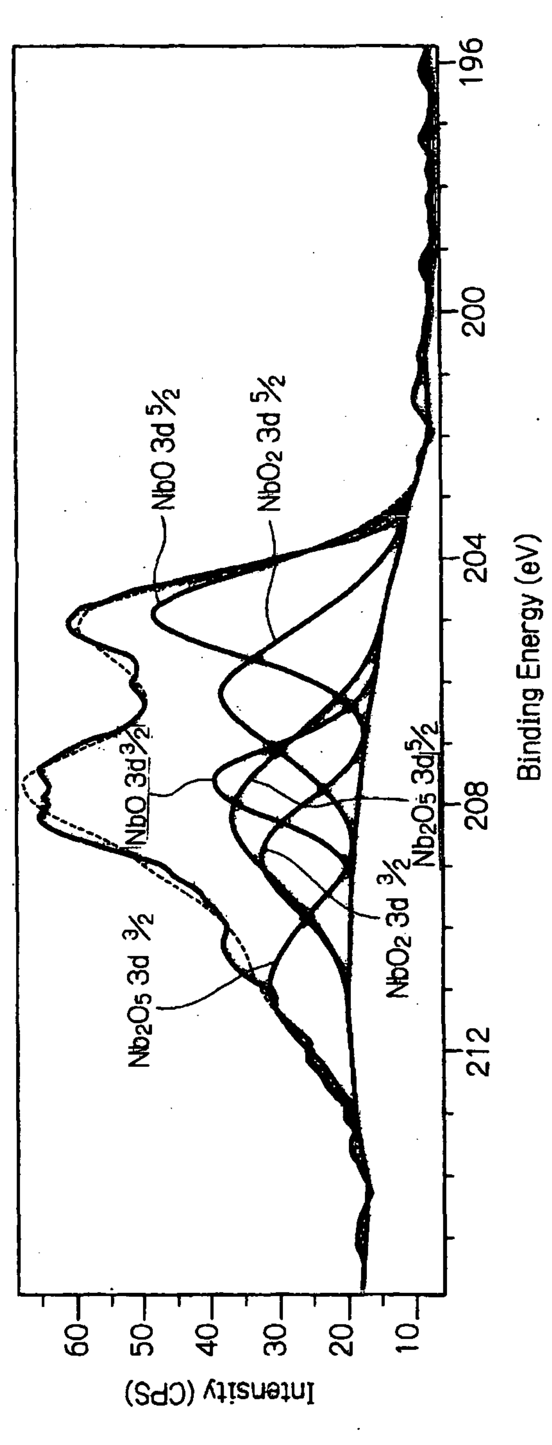

Intensity (CPS)
60
50
40
30
20
10
Binding Energy (eV)
212
208
204
200
196
NbO 3d 5/2
NbO2 3d 5/2
NbO 3d 3/2
Nb2O5 3d 5/2
NbO2 3d 3/2
Nb2O5 3d 3/2

## INTERNATIONAL SEARCH REPORT

International application No.
PCT/JP2006/307713

A. CLASSIFICATION OF SUBJECT MATTER
*G11B7/24*(2006.01), *G11B7/254*(2006.01), *G11B7/257*(2006.01)

According to International Patent Classification (IPC) or to both national classification and IPC

B. FIELDS SEARCHED

Minimum documentation searched (classification system followed by classification symbols)
*G11B7/24*(2006.01), *G11B7/254*(2006.01), *G11B7/257*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 03/044788 A1 (TDK Corp.), 30 May, 2003 (30.05.03), Full text; all drawings & US 2004/0202895 A1 & EP 1447795 A1 | 1-5 |
| A | WO 2004/055800 A1 (Matsushita Electric Industrial Co., Ltd.), 01 July, 2004 (01.07.04), Full text; all drawings & EP 1575041 A1 | 1-5 |
| A | JP 8-77604 A (Hitachi Maxell, Ltd.), 22 March, 1996 (22.03.96), Full text; all drawings (Family: none) | 1-5 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 July, 2006 (04.07.06) | 11 July, 2006 (11.07.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/307713

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The inventions of claims 1-5 relate to "an optical recording medium wherein the thickness t1 of the intermediate layer a high-temperature high-humidity storage test is $0.8t \leq t1 \leq 1.2t$ where t is the thickness of the intermediate layer before the test".

The inventions of claims 6-12 relate to "an optical recording medium manufacturing method wherein an intermediate layer is formed by sputtering using a rare gas and an oxygen gas as a sputtering gas".

The inventions of claims 13-16 relate to "an optical recording medium wherein an intermediate layer satisfies $40\% \leq A \leq (A+B) \leq 100\%$ (A is the proportion of the main component the oxidized state (Continued to extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

INTERNATIONAL SEARCH REPORT

International application No.
PCT/JP2006/307713

Continuation of Box No.III of continuation of first sheet(2)

of which is stable, and B is the proportion of a component the oxidized state of which is unstable)".

The inventions of claims 17-19 relate to "an optical recording medium which has an intermediate layer containing a material satisfying $0.8 \leq B/A \leq 1$ where A is the peak intensity before storage in pure water at 60°C for two days measured by SEM-EDX element analysis, and B is the peak intensity after the storage".

Since these inventions are not in a technical relationship involving one or more of the same or corresponding special technical feature, they cannot be considered to be so linked as to form a single general inventive concept.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4074690 A
- JP 7304256 A
- JP 7304257 A
- JP 8127174 A
- JP 11053758 A
- JP 11334204 A
- JP 11334205 A
- JP 11334206 A
- JP 11334207 A
- JP 2000043423 A
- JP 2000108513 A
- JP 2000113504 A
- JP 2000149320 A
- JP 2000158818 A
- JP 2000228028 A
- JP 11120617 A
- JP 2002373451 A
- JP 61148162 A
- JP 51016675 A
- JP 1096171 A
- JP 63209995 A
- JP 10297103 A
- JP 11078106 A
- JP 11348420 A
- JP 2000052658 A
- JP 10151861 A
- JP 58175693 A
- JP 59081194 A
- JP 60018387 A
- JP 60019586 A
- JP 60019587 A
- JP 60035054 A
- JP 60036190 A
- JP 60036191 A
- JP 60044554 A
- JP 60044555 A
- JP 60044389 A
- JP 60044390 A
- JP 60054892 A
- JP 60047069 A
- JP 4025492 A
- JP 1038680 B
- JP 6026028 B
- DE 350399
- JP 2005115870 A
- JP 2005115922 A
- JP 2005115923 A
- JP 2005115924 A


### Non-patent literature cited in the description


- Nikkei New Media. 1995
- *ISOM2000,* 210-211
- *Chem. Rev.,* 1991, vol. 91, 165
- *Journal of Japanese Chemical Society,* October 1992, 1141